(19) Europäisches Patentamt
European Patent Office
Office européen des brevets

(11) EP 2 246 233 B1

## (12) EUROPEAN PATENT SPECIFICATION

(45) Date of publication and mention
of the grant of the patent:
**05.06.2019  Bulletin 2019/23**

(51) Int Cl.:
**B61D 1/06** *(2006.01)*    **B61D 17/02** *(2006.01)*

(21) Application number: **09159160.2**

(22) Date of filing: **30.04.2009**

(54) **Vehicle with an aerodynamically optimized vehicle head**

Fahrzeug mit einem aerodynamisch optimierten Fahrzeugkopf

Véhicule avec extrémité optimisée aérodynamiquement

(84) Designated Contracting States:
**AT BE BG CH CY CZ DE DK EE ES FI FR GB GR HR HU IE IS IT LI LT LU LV MC MK MT NL NO PL PT RO SE SI SK TR**

(43) Date of publication of application:
**03.11.2010  Bulletin 2010/44**

(73) Proprietor: **Bombardier Transportation GmbH 10785 Berlin (DE)**

(72) Inventors:
• **Weise, Marco**
**10317 Berlin (DE)**
• **Schober, Martin**
**13349 Berlin (DE)**
• **Tietze, Andreas**
**10551 Berlin (DE)**

(74) Representative: **Cohausz & Florack Patent- & Rechtsanwälte Partnerschaftsgesellschaft mbB Bleichstraße 14 40211 Düsseldorf (DE)**

(56) References cited:
**CH-A5- 679 922     DE-C1- 19 912 144 JP-A- 1 074 160**

**Description**

The invention relates to a vehicle, in particular a rail vehicle, for a bidirectional operation at a travelling speed above 120 km/h, in particular above 160 km/h, in a respective direction of travel. The vehicle comprises at least one vehicle module with a wagon body being supported on a running gear adapted to run on a track defining a track level. The vehicle module defines a longitudinal direction, a transverse direction and a height direction, the vehicle module having a vehicle height dimension above the track level in this height direction. The wagon body has an outer skin and comprises a head section located at one of its ends. In a roof section, the wagon body has a flow separation section comprising a flow separation device, in particular a flow of separation edge, said flow separation device having a height extension in said vehicle height direction. This flow separation device provides a persistent separation of an airflow from the outer skin of the wagon body when the vehicle module runs at said travelling speed with the head section forming a trailing end of the vehicle module. The invention further relates to a method of aerodynamically optimizing a head section of such a vehicle for a bidirectional operation.

The wagon bodies of vehicles, in particular rail vehicles, travelling (under normal operating conditions) at relatively high speeds in both directions typically are aerodynamically optimized in terms of minimizing the flow resistance or drag of the vehicle. To this end, typically, the head sections (of typically substantially identical outer shape) at both ends of the vehicle have a smoothly and continuously curved outer skin generating as few drag as possible under normal operating conditions. This smoothly curved design is mainly due to the fact that the head section, when located at the leading end of the vehicle, shall generate as few drag as possible.

However, when such a head section aerodynamically optimized for leading end operation is located at the trailing end of the vehicle several aerodynamic problems arise (in particular with rail vehicles having a relatively large wagon body cross-section in a plane perpendicular to their longitudinal direction)

One of these problems lies in the fact that a periodically alternating flow separation pattern (similar to a so called Karman vortex street) may develop at both sides of the trailing end of the vehicle leading to a considerable vibration excitation of the vehicle and, consequently, to running instability problems. In order to avoid these running instability problems it has been suggested in DE 199 12 144 C1 and JP 01074160 A to provide a selectively activatable flow separation device in the region of the head section. This flow separation device, in the height direction of the vehicle, extends at least over the majority of the respective lateral surface of the outer skin as well as over the roof part of the outer skin in order to have a large impact on the flow separation behaviour in the head section.

When located at the leading end of the vehicle, this flow separation device is in a retracted state and, consequently, aerodynamically ineffective in order to avoid any increase in the drag of the leading end head section of the vehicle. However, when located at the trailing end of the vehicle, this flow separation device is in an extended state providing a pronounced flow separation edge and, consequently, aerodynamically effective to provide an improved flow separation behaviour avoiding the above vibration excitation.

Although this flow separation device provides an improvement as far as the reduction in the vibration excitation is concerned it has the disadvantage that, on the one hand, it is a rather large component requiring considerable construction effort to guarantee proper operation. On the other hand, further aerodynamic problems that will be outlined below may not be avoided by such a solution.

One of these further aerodynamic problems lies in the fact that large vehicles, such as rail vehicles, running at high speeds typically induce considerable air pressure fluctuations and, consequently, draft air flows in the immediate vicinity of the vehicle (henceforth also referred to as "slipstream"). These air pressure fluctuations and slipstream effects ultimately generate sudden loads (henceforth also referred to as "aerodynamic trackside loads") on persons or objects present in the surroundings of the track used by the vehicle (e.g. passengers waiting on a railway station platform, trackside workers, infrastructure components etc). Depending on the speed and the aerodynamic properties of the vehicle as well as on the position of the person or object in relation to the track these slipstream induced aerodynamic trackside loads can be of significant strength potentially resulting (immediately or over time) in damage of trackside structures or (eventually hazardous) destabilization of persons.

Since such slipstream induced aerodynamic trackside loads on persons or objects in the vicinity of the track constitute a safety relevant issue, typically, their limitation is the object of corresponding safety regulations set up by the operator of the transportation infrastructure, governmental, national or multinational institutions etc. For example, in Europe, the so called "Technical Specification of Interoperability" (TSI) has been set up for the railway traffic field defining, among others, maximum limits for the flow speeds or loads to be experienced at defined trackside positions (i.e. defined relative positions with respect to the track used by a passing rail vehicle). For example, this TSI defines maximum limits for a trackside point located 3 m laterally from the track center and 0.2 m above track level (trackside worker scenario) or 1.2 m to 1.44 m above track level (person on platform scenario).

The passage of a rail vehicle can be split into several phases, an encountering phase, a passing phase and a wake phase. The vehicle position (relative to a given trackside location) and, consequently, the point in time at which the strongest trackside aerodynamic loads occur is strongly dependent on the type of the passing vehicle. Freight trains usually show the maximum aerodynamic trackside loads in the lateral boundary region of the train while smooth passenger trains typically show these maximum aerodynamic trackside loads in the wake region after the tail passage. While the flow intensity in the slipstream strongly depends on a series of different boundary conditions (such as the train speed or crosswind) one of the most important vehicle design related factors is the shape of its tail defining the flow pattern developing in the wake.

Many modern medium-speed and high-speed rail vehicle designs (similar to the ones disclosed in DE 199 12 144 C1 and JP 01074160 A) show a slipstream behaviour where two pronounced laterally adjacent longitudinal wake vortices develop at the trailing end of the vehicle. These wake vortices have opposed senses of rotation such that each one of the longitudinal wake vortices shows a flow pattern which, in a central vertical plane of the track, has a strong flow speed component directed vertically downward (i.e. towards the track) and, down at track level, has a strong flow speed component directed laterally outward. Depending on the vehicle speed these pronounced wake vortices lead to considerable flow speeds and, consequently, to unacceptably high aerodynamic trackside loads on persons or objects in trackside positions. Furthermore, these pronounced wake vortices generate considerable drag and, consequently, an aerodynamically unfavourable behaviour of the vehicle in this respect as well.

Although the active flow separation devices disclosed in DE 199 12 144 C1 and JP 01074160 A may, eventually, help to reduce the extent of these longitudinal wake vortices, they show the disadvantage that, on the one hand, due to their active design they are of relatively complex design adding to the overall cost of the vehicle. On the other hand, if designed as a passive, permanently aerodynamically effective component, these comparatively large flow separation devices induce considerable drag when located at the leading end of the vehicle. In other words, such a passive variant would lead to a leading end flow pattern which is economically unfavourable for vehicles intended for a bidirectional operation.

Thus, it is an object of the present invention to at least reduce in the disadvantages outlined above, in particular, to beneficially influence the flow pattern developing at a head section of a vehicle for bidirectional operation at high travelling speeds providing, both, low overall drag of the vehicle and reduced aerodynamic trackside loads at defined trackside locations close to the track.

The present invention achieves this object starting from a rail vehicle according to the preamble of claim 1 by the features of the characterising part of claim 1. It furthermore solves this problem starting from a method according to the preamble of claim 15 by the features of the characterising part of claim 15.

The present invention is based on the technical teaching that a reduction in, both, the overall drag and the aerodynamic trackside loads of a vehicle for bidirectional operation at relatively high speeds (above 120 km/h, preferably above 160 km/h) may be achieved in a simple, cost-effective manner if a flow separation device is provided in the head section of the vehicle. This flow separation device is located in the roof section of the vehicle and, thus, extends (in the height direction of the vehicle) only over a certain top fraction or uppermost fraction of the vehicle that is limited to at most the upper 30% of the vehicle height dimension. More particularly, it has been realised that such a flow separation device providing persistent separation of the airflow from the outer skin of the vehicle when located at the trailing end of the vehicle, despite only extending over a rather small top fraction of the vehicle height, at least reduces or even avoids formation of the pronounced longitudinal wake vortices and generates a modification of the static pressure distribution over the outer skin of the trailing end section leading to reduce drag as well as reduced aerodynamic trackside loads.

More precisely, it has been realised that the persistent flow separation in this upper fraction of the trailing end of the vehicle (aft of the flow separation device) generates a rise in the static pressure in the airflow passing the upper part or roof part of the outer skin which reduces the differences in the static pressure distribution (hereinafter also called static pressure distribution differences) with respect to the parts of the airflow passing the lower lateral parts of the outer skin.

This modification in the static pressure distribution goes along with a flow separation pattern develops at the trailing end of the vehicle which is completely different from the pronounced longitudinal wake vortices produced with conventional head section designs. This flow separation pattern is characterized by a relatively stable "wake bubble" dragged along with the vehicle and showing a rather calm, micro-turbulent flow within the wake bubble. The outer surface of the wake bubble substantially "continues" the outer skin of the vehicle under a continuous reduction of the cross-section of the wake bubble (in a plane perpendicular to the longitudinal direction of the vehicle) such that a smooth "reunification" of the parts of the airflow passing different parts of the vehicle surface (such as the roof part and the lateral parts) is achieved. It will be appreciated that this wake bubble flow pattern provokes considerably less drag as well as considerably less aerodynamic trackside loads than the longitudinal wake vortices of conventional vehicle head designs.

It will be appreciated in this context that the tendency to generate such pronounced longitudinal wake vortices depends on the degree of so-called boat tailing of the head section of the vehicle. The expression "boat tailing" hereby designates a design with a pronounced inward curvature of the lateral parts of the outer surface towards the trailing end of the vehicle. Consequently, the extension of the flow separation device or the fraction of the airflow passing this flow separation device, respectively, may be the smaller the higher the degree of boat tailing is selected.

Furthermore, thanks to the comparatively small size of the flow separation device, the flow separation device, when located at the leading end of the vehicle, (if at all) only generates a comparatively moderate rise in the drag of the vehicle. This rise in the drag at the leading end is largely outweighed by the reduction of the drag provided by the (eventually identically designed) flow separation device located at the trailing end of the vehicle. Thus, in total, a considerable reduction of the overall drag of the vehicle may be achieved. This situation also allows designing the flow separation device as a passive, permanently aerodynamically effective device which considerably reduces the complexity and, consequently, the costs of such a solution (in comparison to the active solutions known from the prior art).

In other words, according to the invention, other than known from typical designs for train head sections (operated at medium or high travelling speeds above 120 km/h or even above 160 km/h) with a smoothly curved (typically convex) outer skin eagerly avoiding such flow separation sections, a flow disturbing deviation from such a smooth outer skin is intentionally introduced accepting the (eventual) moderate rise in the drag when located at the leading end knowing that it is largely outweighed by the reduction in the drag achieved by this means when located at the trailing end.

Thus, according to one aspect of the invention there is provided a vehicle, in particular a rail vehicle, for a bidirectional operation at a travelling speed above 120 km/h, in particular above 160 km/h, in a respective direction of travel comprising at least one vehicle module with a wagon body being supported on a running gear adapted to run on a track defining a track level. The vehicle module defines a longitudinal direction, a transverse direction and a height direction, the vehicle module having a vehicle height dimension above said track level in the height direction. The wagon body has an outer skin and comprises a head section located at one of its ends. The wagon body, in a roof section of the wagon body, has a flow separation section comprising a flow separation device, in particular a flow separation edge. The flow separation device has a height extension in the vehicle height direction and provides a persistent separation of an airflow from the outer skin of the wagon body when the vehicle module runs at said travelling speed with said head section forming a trailing end of the vehicle module. The height extension of the flow separation device ranges up to 30% of the vehicle height dimension, preferably from 2% to 30% of the vehicle height dimension, more preferably 5% to 25% of the vehicle height dimension, and even more preferably from 5% to 20% of the vehicle height dimension, of the vehicle module in the air flow separation section.

It will be appreciated that the flow separation device may be of any design suitable to achieve the desired beneficial influence on the flow pattern at the leading end and the trailing end as it has been outlined above. In particular, the flow separation device may be a planar or arbitrarily curved component, providing the desired flow pattern, in particular the wake bubble flow pattern as outlined above. Preferably, the flow separation device comprises a flow separation edge, the flow separation edge defining a plane of main extension of the flow separation device. This plane of main extension preferably is substantially parallel to the transverse direction and inclined with respect to the longitudinal direction by a first angle. The first angle ranges from 30° to 90°, preferably ranging from 60° to 90°, more preferably ranging from 75° to 90°. By this means, especially beneficial results may be achieved.

The first angle may be chosen in both directions. Preferably, the plane of main extension is arranged such that a lower part of the plane of main extension is located closer to an end of the wagon body forming the head section than an upper part of that plane of main extension. In other words, the upward facing side of the plane of main extension is also facing rearward. Such a configuration is particularly beneficial since it provides an advantageous flow pattern in the wake region of the vehicle.

In addition or as an alternative, any point of the flow separation edge preferably has a perpendicular distance to the plane of main extension which is less than 10%, preferably less than 5%, of a maximum edge width $Ws_{max}$ of the flow separation edge in said transverse direction. By this means, a comparatively simple design having beneficial properties may be achieved. With further preferred embodiments of the present invention at least 80% of the flow separation edge, preferably at least 90% of the flow separation edge, more preferably substantially 100% of the flow separation edge, lie within the plane of main extension leading to a further simplified design.

The flow separation device may have any appropriate design providing the desired persistent flow separation. For example, a (passive or active) design may be chosen creating a flow of a flow separation medium at the location of the flow separation device at the outer skin of the vehicle, the flow of the flow separation medium (in its interaction with the airflow along the outer skin) inducing or provoking separation of the airflow from the outer skin. Any suitable flow separation medium may be chosen. For example, a suitable flow of pressurized air may be provided through one or more suitably shaped openings within the outer skin of the vehicle.

Preferably, the flow separation device comprises a sharp, pronounced flow separation edge, the flow separation edge having at least one edge section defining a tangential direction in each point of the edge section. The flow separation edge, in the edge section and in a sectional plane perpendicular to the tangential direction, has a radius of curvature of less than 15 mm, preferably of less than 10 mm, more preferably of less than 5 mm. By this means, a sharp and pronounced flow separation edge is achieved guaranteeing persistent flow separation in a simple and efficient manner.

The edge section with the sharp flow separation edge may extend only over a part of the flow separation edge. Preferably, the edge section with the sharp flow separation edge extends over at least 60% of the flow separation edge, preferably over at least 80% of the flow separation edge, more preferably over substantially 100% of the flow separation

4

edge, leading to stable and reliable flow separation properties of the flow separation edge.

The flow separation device may have any suitable arrangement on the outer skin of the vehicle. With preferred embodiments of the invention, the flow separation device comprises a flow separation edge extending, in particular substantially continuously extending, from one lateral surface to an opposing lateral surface of the wagon body. By this means the formation of the desired flow separation pattern with an aerodynamically advantageous shape of the wake bubble is achieved.

As mentioned above, the flow separation device according to the invention may be a passive or an active device. Thus, with certain preferred embodiments of the invention, the flow separation edge forms a permanently aerodynamically active component of the flow separation device. For example, the flow separation edge may be formed on a rigid component rigidly connected to the wagon body. However, with other preferred embodiments of the invention, the flow separation edge forms a selectively aerodynamically activatable component of the flow separation device. For example, in certain cases, the flow separation edge may be formed on a movable component (e.g. in a configuration similar to the ones disclosed in DE 199 12 144 C1 and JP 01074160 A).

The flow separation device may be of any suitable design providing the desired flow separation, in particular, the desired flow separation pattern forming the wake bubble mentioned above. For example, the flow separation device may be formed by a separate component connected to the wagon body. In particular, the flow separation device may be formed by a comparatively small element (even arranged in a slight distance from the outer skin of the wagon body) forming a flow separation edge. Such an element, for example, may have any desired and suitable cross-section. In particular, a cross-section similar to the one of an airfoil may be chosen.

The invention shows a very simple and robust design, the flow separation device comprises a flow separation step (in other words a so called backward facing step) comprising a flow separation edge, a first step wall element and a second step wall element, the flow separation edge being formed at a conjunction of the first step wall element and the second step wall element, the first step wall element in the second step wall element having preferred and advantageous shapes and orientations within space as will be outlined in the following.

A basic property of the flow separation device is that it provides persistent flow separation from the outer skin of the wagon body or, in other words, that re-contacting between the separated flow and the outer skin at the trailing end is reliably avoided when the vehicle runs at its travelling speed. According to the invention, this persistent flow separation is preferably provided by a design with a flow separation step which, on the one hand, provokes a flow that has a flow direction at the flow separation edge and which, on the other hand, has a second step wall that is located (in this flow direction) after the flow separation edge and that is inclined with respect to this flow direction by at least 15° such that the transverse distance (i.e. the distance in a direction transverse to the flow direction) between the separated flow and the second step wall quickly increases as the flow propagates.

It will be appreciated in this context that the second step wall does not necessarily have to be a straight wall element but may be arbitrarily curved (in one or two directions) or may be an (arbitrary) combination of curved and/or straight sections.

The second step wall element descends from the flow separation edge and is located on a side of the flow separation edge facing towards an end of the wagon body forming the head section. The flow separation edge has at least one edge section defining a tangential direction in each point of the edge section, the first step wall element and the second step wall element being arranged such that, in one preferred variant, the first step wall element, in the edge section and at least in a first step wall portion adjacent to the flow separation edge as well as in a sectional plane perpendicular to the tangential direction, has a first angle of inclination from 10° to 0°, preferably from 7° to 0°, with respect to a direction parallel to the longitudinal direction. With such a configuration an orientation of the flow direction may be achieved which is beneficial in providing the above quick increase in the transverse distance between the flow and the second step wall without introducing a pronounced perturbation in the smooth design of the outer skin of the vehicle. This reduction in the perturbation of the smooth outer skin has the further advantage that the increase in the drag introduced due to the flow separation step when located at the leading end of the vehicle is less pronounced leading to a considerable amelioration of the drag behavior of the vehicle.

In addition or as an alternative, the first step wall element and the second step wall element are arranged such that the second step wall element, in the edge section and at least in a second step wall portion adjacent to the flow separation edge as well as in a sectional plane perpendicular to the tangential direction, has a second angle of inclination of at least 15°, preferably at least 20°, more preferably from 20° to 60°, with respect to a direction parallel to the longitudinal direction. It should be noted that a second angle of inclination beyond 90° may also be chosen. This configuration as well is beneficial as far as the quick increase in the transverse distance between the flow and the second step wall is concerned.

In addition or as an alternative the first step wall element, in the edge section and at least in a first step wall portion adjacent to the flow separation edge as well as in a sectional plane perpendicular to the transverse direction, has a first angle of inclination from 10° to 0°, preferably from 7° to 0°, with respect to a direction parallel to the longitudinal direction. Furthermore, in addition or as alternative, the second step wall element, in the edge section and at least in a second step wall portion adjacent to the flow separation edge as well as in a sectional plane perpendicular to the transverse direction, has a second angle of inclination of at least 15°, preferably at least 20°, more preferably from 20° to 60°, with respect to a direction parallel to the longitudinal direction. It should be noted that a second angle of inclination beyond 90° may also be chosen. Both configurations as well are beneficial as far as the quick increase in the transverse distance between the flow (separated from the outer skin at the flow separation edge) and the second step wall is concerned.

With further preferred embodiments of the vehicle according to the present invention the flow separation device comprises a flow separation step comprising a flow separation edge. The flow separation edge and the outer skin of the head section define a tangent line, the tangent line, in a sectional plane perpendicular to the transverse direction, in particular in a sectional plane comprising a longitudinal axis of the wagon body, intersecting the flow separation edge and being tangent to the outer skin at a tangent point located on a side of the flow separation edge facing towards an end of the wagon body forming the head section. This tangent line has a third angle of inclination of at least 15°, preferably at least 20°, more preferably from 20° to 60°, with respect to a direction parallel to the longitudinal direction. By this means a configuration is achieved advantageously guaranteeing that re-contacting of the outer skin is avoided under normal operating conditions at travelling speed.

It will be appreciated in this context that, with other embodiments of the invention, this third angle of inclination (as well as any other angle given in relation to the flow separation step) may also be given in a different sectional plane perpendicular to the tangential direction of the flow separation edge as defined previously (i.e. with the flow separation edge having at least one edge section defining a tangential direction in each point of the edge section).

The flow separation device may be located at any suitable location (in the longitudinal direction) as long as persistent flow separation with the desired beneficial low drag flow separation pattern is achieved. With preferred embodiments of the invention the location of the flow separation device in the longitudinal direction is defined using an auxiliary value, namely a head volume V of the vehicle as will be outlined below. First of all, the flow separation device comprises a flow separation edge intersecting an intersection line of a transverse first plane and a longitudinal second plane. The transverse first plane is perpendicular to the longitudinal direction while the longitudinal second plane is perpendicular to the transverse direction and comprises a longitudinal axis of the wagon body. The outer skin and the transverse first plane define said head volume V (any potential cutout in the wagon body receiving the running gear being completely filled or neglected, respectively). An intersection contour of the outer skin and the transverse first plane define an intersection contour length p, an intersection contour area A and a prismatic length $L_{prism}$ (any potential cutout in the wagon body receiving the running gear again being completely filled or neglected, respectively). A hydraulic diameter $d_h$ of the wagon body in the transverse first plane is defined as

$$d_h = \frac{4 \cdot A}{p} \qquad (1)$$

(as it is typically done in fluid dynamics), while the prismatic length $L_{prism}$ is defined as

$$L_{prism} = \frac{V}{A}. \qquad (2)$$

The flow separation edge, in the longitudinal direction, is located such that a normalized prismatic length

$$l_{prism} = \frac{L_{prism}}{d_h} \qquad (3)$$

is at most 1.75, preferably at most 1.5, more preferably ranges from 0.15 to 1.5. By this means a beneficial longitudinal location of the flow separation device is achieved guaranteeing proper persistent flow separation.

In addition or as an alternative, the flow separation edge is located, in the longitudinal direction, in a region of transition from a prismatic part of the outer skin (i.e. the "extruded" part of the wagon body where the overall outer contour in a plane perpendicular to the longitudinal direction is substantially constant along the longitudinal direction) and a head section part of the outer skin deviating from the prismatic shape. Here, the desired low drag flow separation pattern may be achieved while at the same time obtaining a design having only a minor impact on the smooth appearance of the outer shape of the vehicle and, in particular, leading (if noticeable at all) only to a small rise in the drag when the flow separation device is located at the leading end of the vehicle. Preferably, the prismatic part of the outer skin is continued up to the flow separation edge in a height region defined by the flow separation edge. This leads to a particularly smooth appearance.

The flow separation device may have any suitable width, i.e. dimension in the transverse direction, as long as persistent flow separation with the desired beneficial low drag flow separation pattern is achieved. With preferred embodiments of the invention the width of the flow separation device is defined using a further auxiliary value, namely a normalized maximum edge width as will be outlined below. The flow separation device comprises a flow separation edge intersecting an intersection line of a transverse first plane and a longitudinal second plane, the transverse first plane being perpendicular to the longitudinal direction, the longitudinal second plane being perpendicular to the transverse axis and comprising a longitudinal axis of the wagon body. A perpendicular projection of the flow separation edge onto the transverse first plane has a maximum edge width $Ws_{max}$ in the transverse direction and the outer skin in the transverse first plane has a maximum wagon body width $W_{max}$. The flow separation edge is arranged such that said normalized maximum edge width

$$ws_{max} = \frac{Ws_{max}}{W_{max}} \qquad (4)$$

of the flow separation edge is at least 0.25, preferably at least 0.3, more preferably ranges from 0.3 to 1.0. Herewith, the desired beneficial flow separation pattern may be achieved at minimum impact on the smooth outer appearance of the vehicle or wagon body, respectively.

Furthermore, the flow separation device having a flow separation step may have any suitable (central) step height, i.e. dimension of the flow separation step in the height direction, as long as persistent flow separation with the desired beneficial low drag flow separation pattern is achieved. With preferred embodiments of the invention the height of the flow separation device in the height direction is defined using a further auxiliary value, namely a normalized step height as will be outlined below. The flow separation step has a step wall element descending from the flow separation edge and defines, in the longitudinal second plane, a lower end of the flow separation device, the flow separation step, in the height direction, has a step height Hs between the lower end and the flow separation edge, and the outer skin in the longitudinal second plane has a wagon body height H. The flow separation step is arranged such that a normalized step height

$$hs = \frac{Hs}{H} \qquad (5)$$

of the flow separation step is at least 0.005, preferably at least 0.01, more preferably ranges from 0.01 to 0.15. Herewith, the desired beneficial flow separation pattern may be achieved at minimum impact on the smooth outer appearance of the vehicle or wagon body, respectively.

Furthermore, the flow separation device having a flow separation step may have any suitable projection area, i.e. projection area on a plane perpendicular to the longitudinal direction, as long as persistent flow separation with the desired beneficial low drag flow separation pattern is achieved. With preferred embodiments of the invention the projection area of the flow separation step is defined using a further auxiliary value, namely a normalized step area as will be outlined below. The flow separation step has a step wall element descending from the flow separation edge and defining a lower end of the flow separation device, a perpendicular projection of the flow separation step onto the transverse first plane having a step area As and an intersection contour of the outer skin (eventual cutouts for running gears being filled/neglected) and the transverse first plane defining an intersection contour area A. The flow separation step is arranged such that a normalized step area

$$as = \frac{As}{A} \qquad (6)$$

of the flow separation step is at least 0.003, preferably at least 0.005, more preferably ranges from 0.005 to 0.1. Herewith as well the desired beneficial flow separation pattern may be achieved at minimum impact on the smooth outer appearance of the vehicle or wagon body, respectively.

The desired low drag flow separation pattern may be achieved by any suitable design of the flow separation device providing a persistent separation of a first airflow from the outer skin of the wagon body in conjunction with a suppression of the pronounced longitudinal wake vortices as outlined above . Preferably, the flow separation device is arranged such that the persistent separation of a first airflow from the outer skin of the wagon body extends over a flow separation area of the outer skin, the flow separation area being of sufficient size to at least reduce, in particular substantially avoid, the formation of two pronounced longitudinal wake vortices in a wake of the wagon body.

The flow separation device according to the invention may be used exclusively on one end of the vehicle. This may be the case, for example, in situations where the vehicle module is a non-motorized unit used in a train configuration with a locomotive (or the like) located at the other end of the train and providing the traction power. In this case the overall reduction of the drag results over time (the pronounced drag reduction achieved during trailing end operation over time outweighing the moderate drag increase during leading end operation).

However, preferably, both ends of the vehicle show flow separation devices according to the invention. Both flow separation devices at both ends preferably are of identical design to provide, in a simple manner, identical drag behavior of the vehicle in both directions of travel. Thus, preferably, the flow separation device is a first flow separation device located at a first end of the vehicle, a second flow separation device being located at an opposite second end of the vehicle. The second flow separation device preferably is substantially identical to the first flow separation device.

The present invention may be used in the context of arbitrary types of vehicles. Its effects in overall vehicle drag reduction are particularly beneficial with double-deck vehicles having a large vehicle height and, thus, a large area of attack. Thus, preferably, the wagon body is a double-deck wagon body.

The invention further relates to a method of aerodynamically optimizing a head section of a vehicle, in particular a rail vehicle, for a bidirectional operation at a travelling speed above 120 km/h, in particular above 160 km/h, in a respective direction of travel. Here, in a first step, an initial head section is provided showing an initial flow separation pattern when the vehicle runs at the travelling speed with the head section forming a trailing end of the vehicle, the initial flow separation pattern comprising a formation of two pronounced longitudinal wake vortices in a wake of the vehicle. In a subsequent step, the initial head section is aerodynamically modified to provide a final head section having improved aerodynamic properties. In a second step, a flow separation device is introduced in an upper region of the head section to provide the modified head section, the flow separation device generating a modified flow separation pattern with a persistent separation of an airflow from an outer skin of the vehicle at the flow separation device when the vehicle runs at the travelling speed with the head section forming the trailing end. In a third step, an aerodynamic analysis of the modified flow separation pattern for a formation of the pronounced longitudinal wake vortices in the wake of the vehicle is performed. If the analysis in the previous third step reveals formation of the pronounced longitudinal wake vortices, in a first sub-step of a fourth step, at least one structural parameter of the flow separation device is modified to provide a further modified head section and the third step and the fourth step are repeated. Otherwise, if the analysis in the previous third step reveals no formation of the pronounced longitudinal wake vortices, in a second sub-step of the fourth step, the modified head section analyzed in the previous third step is used as the final head section. By this means, within few systematic steps an aerodynamically optimized head section with a low drag flow separation flow pattern may be achieved in a simple and economic way.

The method may be executed in any suitable way using arbitrary suitable means for generating and analyzing the required test results. Preferably, at least one of the first step, the second step, the third step and the fourth step is executed automatically using a previously established computerized aerodynamic model of the vehicle since this leads to a very simple and reliable procedure for optimizing vehicle heads of existing vehicles as well heads of vehicles to be newly designed.

It will be appreciated that the flow separation device introduced in the second step is a flow separation device as it has been described above in the context of the vehicle according to the invention. Thus, with the method according to the invention, the variants and advantages outlined above in the context of the vehicle according to the invention may be achieved to the same extent such that it is insofar only referred to the explanations given above.

It will be appreciated that arbitrary parameters of the flow separation device may form the at least one structural parameter modified in the fourth step. Preferably, the first angle described above may form the at least one structural parameter and may range from 30° to 90°, preferably range from 60° to 90°, more preferably range from 75° to 90°. Preferably, in the fourth step, the first angle is increased. In addition or as an alternative, the radius of curvature of the edge may form the at least one structural parameter, the radius of curvature being less than 15 mm, preferably of less than 10 mm, more preferably of less than 5 mm; and, preferably, in the fourth step, the radius of curvature is decreased. In addition or as an alternative, the first step wall element has a first angle of inclination forming the at least one structural parameter and ranging from 10° to 0°, preferably from 7° to 0°, with respect to a longitudinal direction of the vehicle and/or the second step wall element has a second angle of inclination forming the at least one structural parameter and ranging from of at least 15°, preferably at least 20°, more preferably from 20° to 60°, with respect to the longitudinal direction; and, preferably, in the fourth step, at least one of the first angle of inclination and the second angle of inclination is increased. In addition or as an alternative, the flow separation device has a longitudinal distance from an end of the vehicle forming the head section, the longitudinal distance forming the at least one structural parameter, and, in the fourth step, the longitudinal distance is increased. In addition or as an alternative, the normalized maximum edge width $ws_{max}$ of the flow separation edge forms the at least one structural parameter and is at least 0.25, preferably at least 0.3, more preferably ranges from 0.3 to 1.0, and, preferably, in the fourth step, the normalized maximum edge width

$ws_{max}$ is increased. In addition or as an alternative, the normalized step height hs of the flow separation step forms the at least one structural parameter and is at least 0.005, preferably at least 0.01, more preferably ranges from 0.01 to 0.15, and, preferably, in the fourth step, the normalized step height hs is increased. In addition or as an alternative, the normalized step area as of the flow separation step forms the at least one structural parameter and is at least 0.003, preferably at least 0.005, more preferably ranges from 0.005 to 0.1; and, preferably, in the fourth step, the normalized step area as is increased.

With further preferred embodiments of the method according to the invention the flow separation device is a first flow separation device located at a first end of the vehicle, a second flow separation device being located at an opposite second end of the vehicle, the second flow separation device being substantially identical to the first flow separation device. In a first partial step of the second sub-step, an aerodynamic analysis of the vehicle running at the travelling speed is performed to reveal a total drag value representative of a total drag of the vehicle; and, in a second partial step of the second sub-step, at least one structural parameter of the first flow separation device and the second flow separation device is synchronously modified to provide a further modified head section and the first partial step and the second partial step are repeated until a substantially minimized value of the total drag value is identified.

It should be noted that, preferably, it is a primary optimization goal of the above method to obtain a wake flow pattern that is beneficial as far as the observance of given limits on the aerodynamic loads at trackside locations is concerned, whereas optimization of the drag behavior of the vehicle, typically, is only a secondary optimization goal.

Further embodiments of the present invention will become apparent from the dependent claims and the following description of preferred embodiments which refers to the appended figures.

Figure 1 is a schematic side view of a preferred embodiment of a vehicle according to the present invention designed using a preferred embodiment of the method of aerodynamically optimizing a head section of a vehicle according to the present invention;

Figure 2 is a schematic top view of the vehicle of Figure 1;

Figure 3 is a schematic front view of the vehicle of Figure 1;

Figure 4 is an enlarged schematic side view of the head section of the vehicle of Figure 1;

Figure 5 is an enlarged schematic side view of detail D of Figure 1;

Figure 6 is a further schematic front view of the vehicle of Figure 1;

Figure 7 is a schematic sectional view of the vehicle of Figure 1 along line VII-VII of Figure 4;

Figure 8 is a further schematic side view of the vehicle of Figure 1;

Figure 9 is a schematic perspective view of a head section of a prior art vehicle running at the travelling speed of the vehicle of Figure 1;

Figure 10 is a schematic perspective view of the head section of the vehicle of Figure 1 running at its travelling speed;

Figure 11 is a diagram reflecting normalized flow speeds in the wake of different vehicles at given locations aft of the trailing end section of the respective vehicle running at the travelling speed of the vehicle of Figure 1;

Figure 12 is a schematic front view of a further preferred embodiment of a vehicle according to the present invention;

Figure 13 is a schematic side view of the head section of the vehicle of Figure 12;

Figure 14 is a schematic side view of a detail of a further preferred embodiment of a vehicle according to the present invention;

Figure 15 is a schematic perspective view of a head section of a further preferred embodiment of a vehicle according to the present invention.

First embodiment

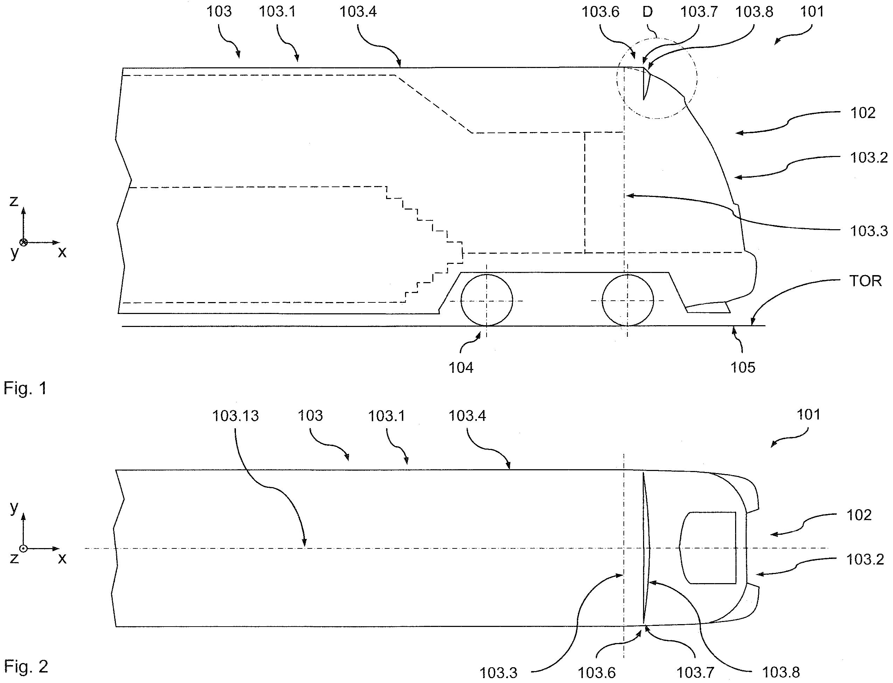

With reference to Figures 1 to 11 a preferred embodiment of a rail vehicle 101 according to the present invention comprising a vehicle module 102 will now be described in greater detail. To facilitate understanding of the following description an xyz coordinate system will be used, the x-direction designating the longitudinal direction of the vehicle module 102, the y-direction designating the transverse direction of the vehicle module 102 and the z-direction designating the height direction of the vehicle module 102.

The vehicle module 102 forms an end car of the rail vehicle 101 which is a medium-speed to high speed train intended for bidirectional operation in a regional public transportation system. In the embodiment shown, the train 101 is composed of a plurality of vehicle modules, wherein the outer shape of the other end car is a substantially identical to the outer shape of the vehicle module 102. However, it will be appreciated that, with other embodiments of the invention, any other outer shape of the other end car may be chosen.

The train 101 has a nominal travelling speed above 180 km/h, i.e., under normal operating conditions, the train 101 is intended to run at this travelling speed on suitable track sections between the stations of the railway net it is operated on. However, it will be appreciated that, with other embodiments of the invention, any other travelling speed starting at 120 km/h may be selected. With preferred variants of the invention, the train has a (medium-speed to high-speed) travelling speed range from 120 km/h to 250 km/h, preferably from 160 km/h to 250 km/h, since, in these travelling speed ranges, the benefits of the invention develop to the largest extent.

Figures 1 to 4 are schematic views of parts of the vehicle module 102 which comprises a double deck wagon body 103 for transporting passengers supported at both of its ends on a respective running gear 104 (e.g. a bogie) running on a track 105 defining a track level TOR (top of rail).

The wagon body 103 has a prismatic body section 103.1 (i.e. a body section having a substantially identical cross section in a plane perpendicular to the longitudinal direction at each point along the longitudinal direction) and a non-prismatic head section 103.2 defining an outer skin 103.4 of the wagon body 103. The transition (in some cases also forming a mechanical interface) between the prismatic body section 103.1 and the non-prismatic head section 103.2 lies in a plane 103.3 perpendicular to the longitudinal direction. However, it will be appreciated that, with other embodiments of the invention, the transition may have any other suitable shape and orientation in space.

As can be seen, in particular, from Figures 1 to 4 and 10, in a roof section 103.5 of the wagon body 103, a flow separation section 103.6 is formed. This flow separation section 103.6 comprises a flow separation device 103.7 in the form of a flow separation step 103.8 formed in the outer skin 103.4 of the wagon body 103 in the area of the head section 103.2. As will be explained in further detail below, if the head section 103.2 is located at the trailing end of the vehicle 101, the flow separation step 103.8 (at least at the travelling speed of the vehicle 101) provides persistent separation of a first airflow 106.1 from the outer skin 103.4, the first airflow 106.1 forming the roof section part of the airflow 106 flowing along the outer skin 103.4.

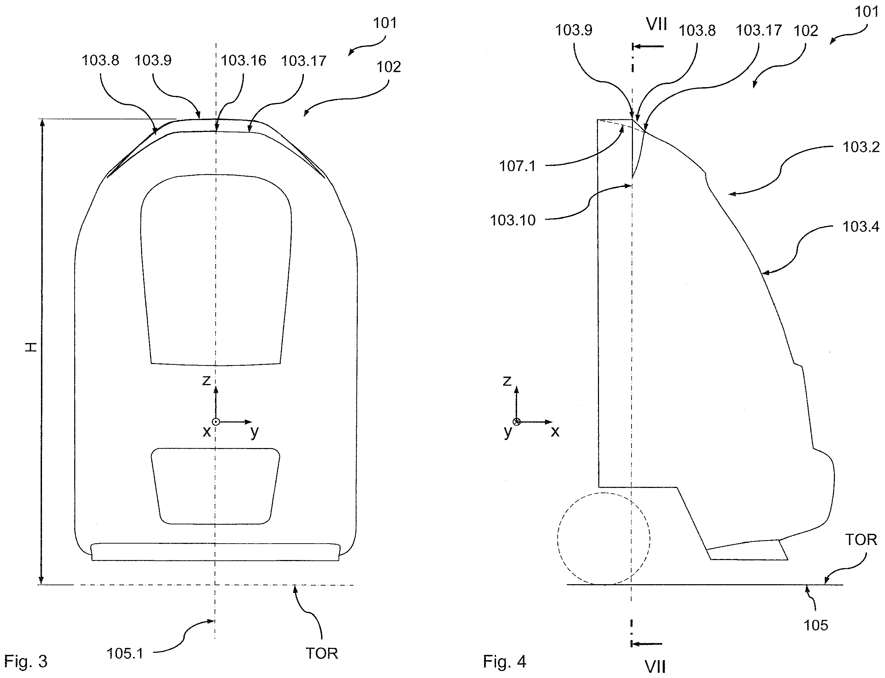

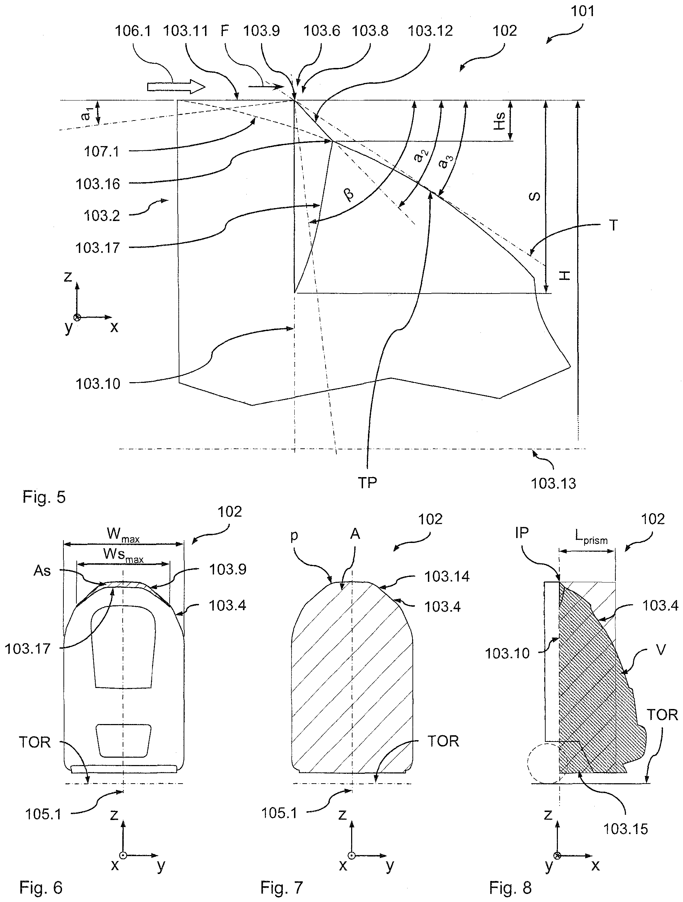

As can bee seen best from Figures 3 and 5, the flow separation step 103.8 comprises a sharp flow separation edge 103.9 extending over the entire height dimension S of the flow separation step 103.8 in the height direction (z-axis). In the embodiment shown, the flow separation step is arranged such that the flow separation edge 103.9 is a planar structure defining a plane of main extension 103.10 of the flow separation edge 103.9.

In the embodiment shown, the height dimension S is about 12.5% of the total height dimension H of the wagon body 103 above the track level TOR in a sectional plane which runs through the uppermost point of the flow separation edge 103.9 and is arranged perpendicular to the longitudinal direction (x-axis). Thus, in the embodiment shown, the plane of main extension 103.10 coincides with this sectional plane the height dimension H is measured in. However, it will be appreciated that, with other embodiments of the invention, another orientation of the plane of main extension of the flow separation edge may be provided (as will yet be explained below).

The arrangement of the flow separation edge 103.9 only over this top fraction or uppermost fraction of the vehicle module 102 (uppermost 12.5% of the vehicle module at this location) has several advantages. On the one hand, such a flow separation device 103.8 provides persistent separation of the first airflow 106.1 from the outer skin 103.4 of the vehicle module 102 (when located at the trailing end) despite the fact that it only extends over this rather small top fraction of the vehicle height.

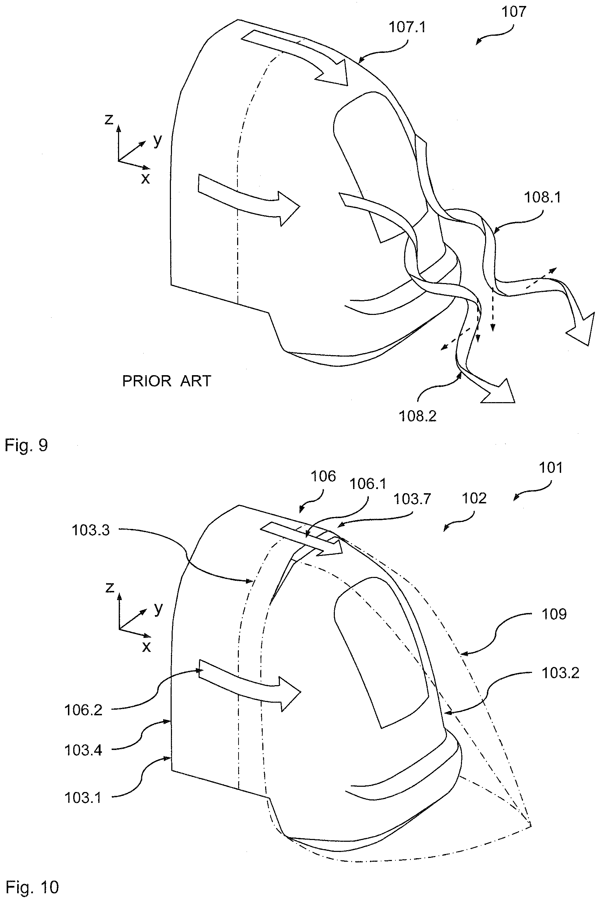

As a consequence, this persistent flow separation generates a modification of the wake flow pattern that goes along with a modification of the static pressure distribution over the outer skin 103.4 of the trailing head section 103.2 that avoids a slipstream behaviour of a prior art rail vehicle 107 (with a conventional medium-speed to high-speed train head design without a flow separation device according to the invention) as it is shown in Figure 9. Figure 9 illustrates a schematic perspective trailing head section 107.1 of such a conventional vehicle 107 and the formation of pronounced longitudinal wake vortices 108.1, 108.2 that were mentioned initially. For a better understanding, the shape of the trailing head section 107.1 is also indicated by the respective dashed contour in Figures 4 and 5 showing that the differences between the vehicle 101 and the vehicle 107 exclusively concentrate on the roof region where the flow separation device 103.7 is located.

More precisely, with the prior art vehicle 107 running at the travelling speed above 160 km/h a slipstream behaviour arises where these two pronounced longitudinal wake vortices 108.1 and 108.2 develop at the trailing end of the vehicle 107. These wake vortices 108.1, 108.2 have opposed senses of rotation such that each one of the longitudinal wake vortices shows a flow pattern which, in a central vertical plane of the track, has a strong flow speed component directed vertically downward (i.e. towards the track) and, down at track level, has a strong flow speed component directed laterally outward (as illustrated by the dashed arrows in Figure 9). Depending on the vehicle speed these pronounced wake vortices 108.1, 108.2 lead to considerable flow speeds and, consequently, to unacceptably high aerodynamic trackside loads on persons or objects in trackside positions. Furthermore, these pronounced wake vortices 108.1, 108.2 generate considerable drag and, consequently, an aerodynamically unfavourable behaviour of the vehicle 107 in this respect as well.

Contrary to the prior art designs, the flow separation device 103.7 leads to a persistent flow separation in the associated upper fraction of the trailing end of the vehicle 101 (aft of the flow separation device 103.7) which generates a rise in the static pressure in the airflow 106.1 passing the upper part or roof part of the outer skin 103.4 which reduces the static pressure distribution and momentum differences with respect to the parts 106.2 of the airflow passing the lower lateral parts of the outer skin 103.4. In conjunction with this reduction in the static pressure distribution and momentum differences formation of the pronounced longitudinal wake vortices 108.1, 108.2 (otherwise typically dominating at such smoothly curved high-speed vehicle trailing ends as shown in Figure 9) is avoided.

In conjunction with this modification in the static pressure distribution a flow separation pattern develops at the trailing end of the vehicle 101 which is completely different from the pronounced longitudinal wake vortices 108.1, 108.2 produced with conventional head section designs. This flow separation pattern is characterized by a relatively stable "wake bubble" (indicated in Figure 10 by the dot-dashed contour 109) dragged along with the vehicle 101. On the inside of the wake bubble 109 a relatively calm, micro-turbulent flow prevails. The outer surface of the wake bubble 109 substantially "continues" the outer skin 103.4 of the vehicle module 102 under a continuous reduction of the cross-section of the wake bubble 109 in a plane perpendicular to the longitudinal direction (x-axis). Thus, a smooth "reunification" of the parts 106.1, 106.2 of the airflow 106 passing different parts of the vehicle surface 103.4 (such as the roof part and the lateral parts) is achieved. The wake bubble 109 as a shape that is substantially symmetric to a central longitudinal plane containing the x-axis and the z-axis. It will be appreciated that this wake bubble flow pattern provokes considerably less drag as well as considerably less aerodynamic trackside loads than the longitudinal wake vortices 108.1, 108.2 of conventional vehicle head designs.

It will be appreciated in this context that the static pressure distribution differences between the roof part 106.1 of the airflow 106 and the lateral parts 106.2 of the airflow 106 depend on the degree of so-called boat tailing of the head section 103.2 of the vehicle module 102. The expression "boat tailing" hereby designates a design with a pronounced inward curvature of the lateral parts of the outer surface 103.4 towards the trailing end of the vehicle module 102. Consequently, the extension of the flow separation device 103.7 or the fraction of the part of the airflow 106 passing the flow separation device 103.7, respectively, may be the smaller the higher the degree of boat tailing is selected.

Furthermore, thanks to the comparatively small size of the flow separation device 103.7, the flow separation device 103.7, when located at the leading end of the vehicle, (if at all) only generates a comparatively moderate rise in the drag of the train 101. This rise in the drag at the leading end is largely outweighed by the reduction of the drag provided by the flow separation device (identically designed in the embodiment shown) located at the other, trailing end of the train 101. Thus, in total, a considerable reduction of the overall drag of the train 101 may be achieved. This situation also allows designing the flow separation device 106 as a rigid flow separation step, i.e. a passive, permanently aerodynamically effective device which considerably reduces the complexity and, consequently, the costs of such a solution (in comparison to the active solutions known from the prior art).

However, it will be appreciated that, with other preferred embodiments of the invention, the flow separation edge may also form a selectively aerodynamically activatable component of the flow separation device. For example, in certain cases, the flow separation edge may be formed on a movable component (e.g. in a configuration similar to the ones disclosed in DE 199 12 144 C1 and JP 01074160 A).

As mentioned previously, the flow separation edge 103.9, in one single edge section, extends over the entire flow separation step 103.8 (i.e. from one lateral surface to the opposing lateral surface of the vehicle module 102) and is designed as a sharp, pronounced edge, thereby achieving in a simple manner the desired flow separation pattern with an aerodynamically advantageous shape of the wake bubble 109. However, it will be appreciated that the flow separation edge, with other embodiments of the invention, may also be provided in a plurality of spatially distinct edge sections.

Over its entire length (i.e. over the entire edge section), the flow separation edge 103.9 defines a tangential direction (in each point of the edge section). The flow separation edge 103.9, in a sectional plane perpendicular to this tangential direction, has a radius of curvature of 5 mm guaranteeing persistent flow separation in a simple and efficient manner.

As can be seen best from the Figure 5, the flow separation step 103.8 comprises a first step wall element 103.11 and a second step wall element 103.12, the flow separation edge 103.9 being formed at a conjunction of the first step wall element 103.11 and the second step wall element 103.12. The second step wall element 103.12 descends from the flow separation edge 103.9 and is located on the side of the flow separation edge 103.9 facing towards the end of the wagon body 103 forming the head section 103.2.

As mentioned above, the flow separation step 103.8 provides persistent flow separation from the outer skin 103.4 of the wagon body 103 or, in other words, and reliably avoids that the first airflow 106.1 re-contacts the outer skin 103.4 when the train 101 runs at its travelling speed. This is achieved by a design of the flow separation step 103.8 which, on the one hand, provokes a first airflow 106.1 that has a flow direction F at the flow separation edge 106.9 and which, on the other hand, has a second step wall 106.12 that is inclined with respect to this flow direction F by at least 15° such that the transverse distance (i.e. the distance in a direction transverse to the flow direction) between the separated flow 106.1 and the second step wall 103.12 quickly increases as the flow 106.1 propagates, thereby reliably preventing re-contact.

It will be appreciated in this context that the second step wall 103.12 does not necessarily have to be a straight wall element but may be arbitrarily curved (in one or two directions) or may be an (arbitrary) combination of curved and/or straight sections.

The first step wall element 103.11, in a first step wall portion immediately adjacent to the flow separation edge 103.9, defines the flow direction F. In the embodiment shown, the first step wall element 103.11, in its first step wall portion as well as in a sectional plane perpendicular to the tangential direction, has a first angle of inclination $a_1 = 0°$ with respect to a direction parallel to the longitudinal direction (x-axis).

However, it will be appreciated that, with other embodiments of the invention, another first angle of inclination $a_1$ ranging from 10° to 0°, preferably from 7° to 0°, may be chosen. In particular, in certain embodiments of the invention, it may be provided that the first step wall element 103.11 ascends towards the flow separation edge 103.9, while, with other embodiments of the invention, the first step wall element 103.11 descends towards the flow separation edge 103.9.

This arrangement of the first step wall element 103.11 leads to an orientation of the flow direction F which is beneficial in providing the above quick increase in the transverse distance between the first airflow 106.1 and the second step wall 103.12 without introducing a pronounced perturbation in the smooth design of the outer skin 103.4 of the vehicle module 102. This moderate perturbation of the smooth outer skin 103.4 has the further advantage that the increase in the drag introduced due to the flow separation step 103.8 when located at the leading end of the train 101 is less pronounced leading to a considerable amelioration of the drag behavior of the train 101.

Furthermore, the second step wall element 103.12, in a second step wall portion immediately adjacent to the flow separation edge 103.9 as well as in a sectional plane perpendicular to the tangential direction, has a second angle of inclination $a_2 = 45°$ with respect to a direction parallel to the longitudinal direction (x-axis). This configuration as well is beneficial as far as the quick increase in the transverse distance between the flow and the second step wall is concerned.

However, it will be appreciated that, with other embodiments of the invention, the second angle of inclination $a_2$ may be at least 15°, preferably at least 20°, more preferably from 20° to 60°.

Furthermore, the flow separation edge 103.9 and the outer skin 103.4 of the head section 103.2 define a tangent line T. The tangent line T, in a sectional plane perpendicular to the transverse direction (y-axis) and comprising a longitudinal axis 103.13 of the wagon body 103, intersects the flow separation edge 103.9 and is tangent to the outer skin 103.4 at a tangent point TP located on the side of the flow separation edge 103.9 facing towards the end of the wagon body 103 forming the head section 103.2. This tangent line T has a third angle of inclination $a_3 = 34°$ with respect to a direction parallel to the longitudinal direction (x-axis). By this means a configuration is achieved advantageously guaranteeing that re-contacting of the outer skin 103.4 is avoided under normal operating conditions of the train 101 running at its travelling speed. It will be appreciated, however, that the beneficial effects of the flow separation device 103.7 do not only arise at the travelling speed but also at almost any speed below this travelling speed down to about 20 km/h (or even below).

However, it will be appreciated that, with other embodiments of the invention, the third angle of inclination $a_3$ may be at least 15°, preferably at least 20°, more preferably from 20° to 60°.

In the embodiment shown, the flow separation edge 103.9, in the longitudinal direction (x-axis), is located at a location defined by a normalized prismatic length $l_{prism} = 0.3864$. As it has been outlined above, this normalized prismatic length $l_{prism}$ is defined using an auxiliary value, namely a head volume V of the vehicle as will be outlined below with reference to Figures 1 to 8, in particular, to Figures 7 and 8.

First of all, the separation edge 103.9 intersects an intersection line of a transverse first plane (perpendicular to the x-axis) and a longitudinal second plane (perpendicular to the y-axis and comprising the longitudinal axis 103.13 of the wagon body 103) at an intersection point IP. Thus, in the embodiment shown, the transverse first plane coincides with the plane of main extension 103.10 of the flow separation edge 103.9. The outer skin 103.4 and the transverse first plane define said head volume V (see Figure 8).

An intersection contour 103.14 of the outer skin 103.4 (with the cutout 103.15 of the wagon body 103 receiving the running gear 104 being filled) and the transverse first plane 103.10 define an intersection contour length p (see Figure 7), an intersection contour area A (see Figure 7) and a prismatic length $L_{prism}$ (see Figure 8).

A hydraulic diameter $d_h$ of the wagon body 103 in the transverse first plane 103.10 is defined according to equation (1) as

$$d_h = \frac{4 \cdot A}{p}$$

(as it is typically done in fluid dynamics), while the prismatic length $L_{prism}$ is defined according to equation (2) as

$$L_{prism} = \frac{V}{A} \cdot$$

Finally, the normalized prismatic length is defined according to equation (3) as

$$l_{prism} = \frac{L_{prism}}{d_h} \cdot$$

As outlined above, in the embodiment shown, the prismatic length calculates as $l_{prism}$ = 0.3864 leading to a beneficial longitudinal location of the flow separation device is achieved guaranteeing proper persistent flow separation. However, it will be appreciated that, with other embodiments of the invention, the normalised prismatic length $l_{prism}$ is at most 1.75, preferably at most 1.5, more preferably ranges from 0.15 to 1.5.

Consequently, as can be seen in particular from Figures 1 to 4, the flow separation edge 103.9 is located (in the longitudinal direction) in a region of transition from the prismatic section 103.1 of the outer skin 103.4 and the non-prismatic head section 103.2. However, as can be also seen, in particular, from Figure 3, the prismatic part of the outer skin 103.4, in approximately the upper half of the flow separation edge 103.9, is continued up to the flow separation edge 103.9. This leads to a particularly smooth appearance of the vehicle module 102 while at the same time guaranteeing proper flow separation.

The overall or maximum width of the flow separation edge 103.9 in the transverse direction (y-axis) is defined using a further auxiliary value, namely a normalized maximum edge width as will be outlined below. In the embodiment shown, the normalized maximum edge width $ws_{max}$ = 0.7676. A perpendicular projection of the flow separation edge 103.9 onto the transverse first plane 103.10 has a maximum edge width $Ws_{max}$ in the transverse direction (y-axis) and the outer skin 103.4 in the transverse first plane 103.10 has a maximum wagon body width $W_{max}$ (see Figure 6). The flow separation edge is arranged such that said normalized maximum edge width calculates according to equation (4) as

$$ws_{max} = \frac{Ws_{max}}{W_{max}} \cdot$$

As outlined above, in the embodiment shown, the normalized maximum edge width calculates as $ws_{max}$ = 0.7676, such that the desired beneficial flow separation pattern with the wake bubble 109 is achieved at a low impact on the smooth outer appearance of the wagon body 103. However, it will be appreciated that, with other embodiments of the invention, the normalized maximum edge width $ws_{max}$ is at least 0.25, preferably at least 0.3, more preferably ranges from 0.3 to 1.0.

Furthermore, in the embodiment shown, the flow separation step 103.8 has a (central) step height, i.e. a dimension of the flow separation step 103.8 along the z-axis between the flow separation edge 103.9 and a lower end point 103.16 of the second step wall element 103.12 defined in the first longitudinal plane (i.e. the plane perpendicular to the y-axis and containing the longitudinal axis 103.13). The step height is defined using a further auxiliary value, namely a normalized step height which calculates (with the wagon body height H) according to equation (5) as

$$hs = \frac{Hs}{H} ,$$

such that, in the embodiment shown, the normalized step height is hs = 0.0263. Thus, the desired beneficial flow separation pattern is achieved at very low impact on the smooth outer appearance of the wagon body 103. However, it will be appreciated that, with other embodiments of the invention, the normalized step height hs of the flow separation step is at least 0.005, preferably at least 0.01, more preferably ranges from 0.01 to 0.15.

Furthermore, the flow separation step 103.8 has a projection area on a plane perpendicular to the longitudinal direction (x-axis). This projection area is defined using a further auxiliary value, namely a normalized step area as. The second step wall element 103.12 defines a lower end 103.17 as well as a perpendicular projection of the flow separation step 103.8 onto the transverse first plane 103.10 that has a step area As (see Figure 6), while the intersection contour of the outer skin 103.4 and the transverse first plane 103.10 defines the intersection contour area A (see Figure 7) mentioned above. The flow separation step 103.8 is arranged such that a normalized step area calculates according to equation (6) as

$$as = \frac{As}{A},$$

such that, in the embodiment shown, the normalized step area is as = 0.0170. Thus, the desired beneficial flow separation pattern is achieved at very low impact on the smooth outer appearance of the wagon body 103. However, it will be appreciated that, with other embodiments of the invention, the normalized step area of the flow separation step is at least 0.003, preferably at least 0.005, more preferably ranges from 0.005 to 0.1.

With these dimensions of the flow separation step 103.8 outlined above the persistent separation of the first airflow 106.1 from the outer skin 103.4 extends over a flow separation area of the outer skin 103.4 that is of sufficient size to generate a first rise in a static pressure within the separated first airflow 106.1 that avoids the formation of the two pronounced longitudinal wake vortices 108.1, 108.2 occurring with conventional vehicle heads.

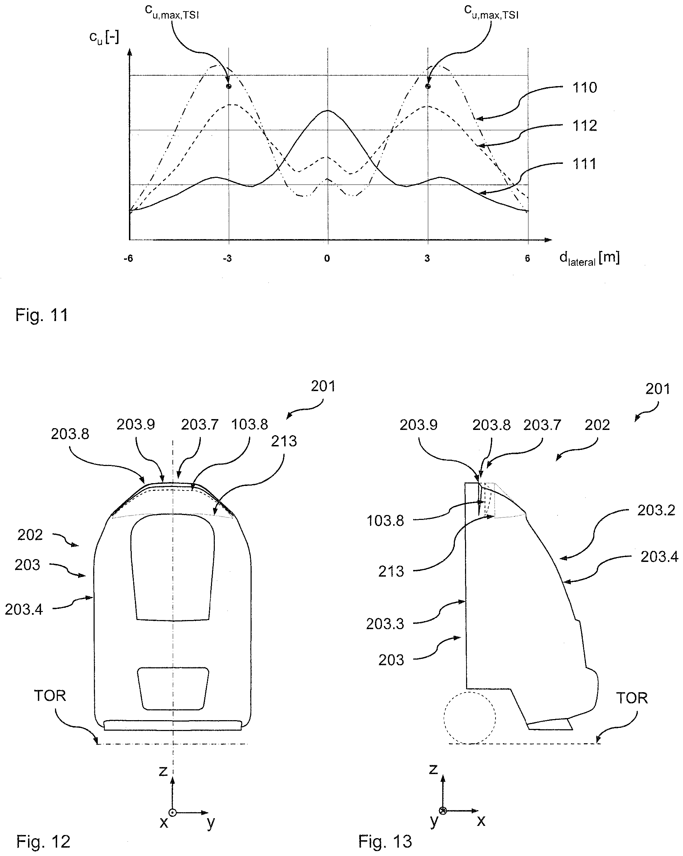

As will be explained with reference to Figure 11, the flow separation pattern with the wake bubble 109 provides a very beneficial slipstream behavior of the train 101. Figure 11 shows a diagram reflecting normalized flow speeds $c_u$ in the wake of different vehicles at given locations aft of the trailing end of the respective vehicle running on a straight horizontal and undistorted track at the travelling speed $U_0 = 200$ km/h of train 101. More precisely, the normalized flow speeds $c_u$ shown in Figure 11 are determined in a plane perpendicular to the longitudinal axis 103.13 at a distance of 14.2 m behind the trailing end of the respective vehicle and at a height level of 1.2 m to 1.44 m above the track level TOR (person on platform scenario) as it is specified in the TSI specification mentioned initially.

It should be noted that in the following vector components u, v, and w of the flow speed vector FS at the respective location will be used, wherein u is the vector component along the x-axis, v is the vector component along the y-axis and w is the vector component along the z-axis.

The normalized flow speed calculates as

$$c_u = \frac{U}{U_0}, \tag{7}$$

wherein $U_0$ is the travelling speed of the vehicle (used as a reference speed) and U is the amount of the component of the flow speed vector FS measured (at the respective location) in a horizontal plane (i.e. in a plane perpendicular to the z-axis) which calculates as

$$U = \sqrt{u^2 + v^2}. \tag{8}$$

The diagram shown in Figure 11 reflects the respective normalized flow speed $c_u$ (obtained in wind tunnel tests) as a function of the lateral distance $d_{lateral}$ of the location of measurement from a central vertical plane 105.1 of the track 105.

Furthermore, the diagram shown in Figure 11 reflects the maximum normalized flow speed $c_{u,max,TSI}$ admissible according to the TSI specification at a lateral distance $d_{lateral,TSI} = 3$ m. In Figure 11, curve 110 shows the normalized flow speed $c_u$ of the vehicle 107 (see Figure 9) while curve 111 shows the normalized flow speed $c_u$ of the train 101. As can be easily seen from curve 111 of Figure 11, with the flow separation device 103.6, a considerable reduction in the normalized flow speed $c_u$ may be achieved (in the locations of interest lateral from the vehicle) with respect to a conventional vehicle (see curve 110) not showing this flow separation device. The reduction is particularly noticeable in trackside locations (of particular interest) at a certain distance (here: more than 1 m) from the center of the track, such that, for example, the limits ($c_{u,max,TSI}$) given in the TSI specification may be easily kept. It will be appreciated that the rise in the central area (less than 1 m from the center of the track) is acceptable since (under normal conditions) no person or aerodynamic load sensitive structure is present at these locations.

The design of the vehicle module 102 has been provided using a method of aerodynamically optimizing the head section of the vehicle module 102. Here, in a first step, an initial head section 107.1 was provided showing an initial flow separation pattern when the vehicle runs at the travelling speed with the head section forming the trailing end of the vehicle. This initial flow separation pattern showed formation of two pronounced longitudinal wake vortices 108.1, 108.2 in the wake of the vehicle.

In a subsequent step, the initial head section 107.1 was aerodynamically modified to provide the final head section 103.3 having improved aerodynamic properties. To this end, in a second step, a flow separation device in the form of a flow separation step was introduced in the upper region of the head section 103.2 to provide the modified head section. In a third step, an aerodynamic analysis of the modified flow separation pattern for a formation of the pronounced longitudinal wake vortices in the wake of the vehicle was performed. Since the analysis in the previous third step revealed formation of the pronounced longitudinal wake vortices, in a first sub-step of a fourth step, some structural parameters of the flow separation device were modified to provide a further modified head section and the third step and the fourth step were repeated until the flow separation step 106.8 was obtained and the analysis in the previous third step revealed no formation of the pronounced longitudinal wake vortices 108.1, 108.2 any more. Finally, in a second sub-step of the fourth step, the modified head section 103.2 analyzed in the previous third step is used as the final head section.

With preferred embodiments of the invention, the flow separation device 103.7 is a first flow separation device located at a first end of the train 101 and a second flow separation device is provided at the opposite second end of the train 101, wherein the second flow separation device is substantially identical to the first flow separation device 103.7. In a first partial step of the second sub-step, an aerodynamic analysis of the train 101 running at the travelling speed was performed to reveal a total drag value TDV representative of a total drag of the vehicle. Then, in a second partial step of the second sub-step, at least one of the structural parameters of the first flow separation device 103.7 and the second flow separation device were synchronously modified to provide a further modified head section and the first partial step and the second partial step were repeated until a substantially minimized value of the total drag value TDV was identified. Once this minimized value of the total drag value TDV was identified, the respective head section was used as the final head section 103.2.

By this means, within few systematic steps the aerodynamically optimized head section 103.2 with a low drag flow separation flow pattern was be achieved in a simple and economic way.

Second embodiment

With reference to Figure 12 and 13 a further preferred embodiment of a vehicle 201 according to the present invention will now be described in greater detail. The vehicle 201, in its basic design and functionality, largely corresponds to the vehicle 101 such that it will be mainly referred to the differences only. Moreover, identical or like components are given the same reference numerals increased by 100. Unless deviating explanations are given in the following it is here explicitly referred to the explanations given above with respect to the features and functions of these components.

The only difference of the vehicle 201 with respect to the vehicle 101 lies in the design of the flow separation step 203.8 of the vehicle module 202. As can be seen from Figures 12 and 13, the flow separation step 203.8 is formed smaller and located at a higher distance from the end of the vehicle module 202 then the flow separation step of the first embodiment indicated by the dashed contour 103.8. As can be seen from curve 112 showing the normalized flow speed $c_u$ of the vehicle 201, the size and flow speed of the two longitudinal wake vortices may be reduced by this smaller flow separation step 203.8 such that the limits given by the TSI specification may be easily observed at a very low impact on the overall smooth appearance of the vehicle head section 203.2.

However, it will be appreciated that, with other embodiments of the invention, also a larger flow separation step may be chosen as it is indicated by the dotted contour 213 in Figures 12 and 13.

Third embodiment

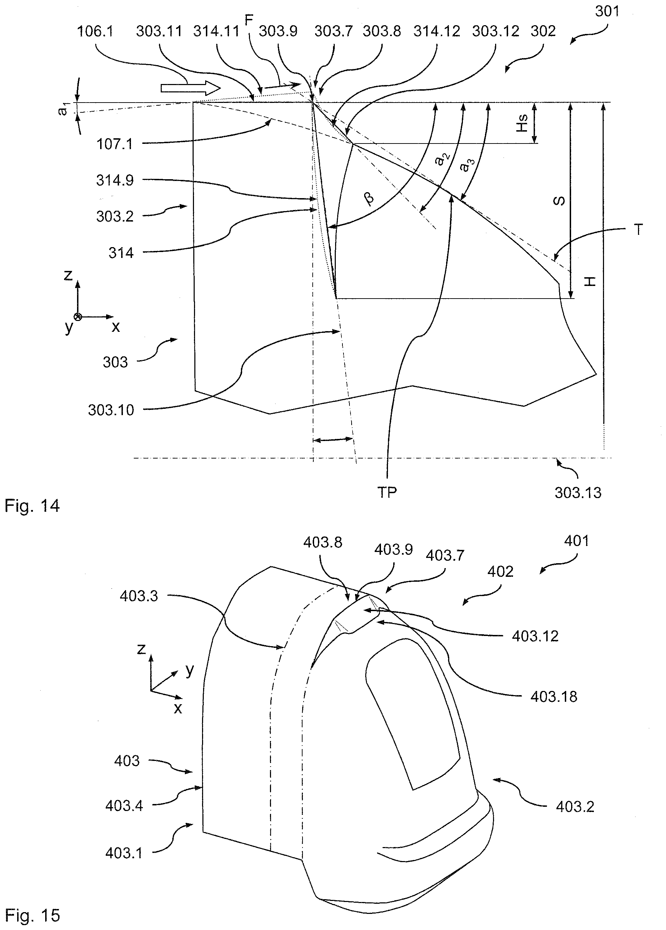

With reference to Figure 14 a further preferred embodiment of a vehicle 301 according to the present invention will now be described in greater detail. The vehicle 301, in its basic design and functionality, largely corresponds to the vehicle 101 such that it will be mainly referred to the differences only. Moreover, identical or like components are given the same reference numerals increased by 300. Unless deviating explanations are given in the following it is here explicitly referred to the explanations given above with respect to the features and functions of these components.

The only difference of the vehicle 301 with respect to the vehicle 101 again lies in the design of the flow separation step 303.8 of the vehicle module 302. As can be seen from Figure 14, the planar flow separation edge 303.9 is arranged such that its plane of main extension 303.10 is parallel to the transverse direction (y-axis) and inclined with respect to the longitudinal direction (x-axis) by an angle $\beta = 83°$.

The plane of main extension 303.10 is arranged such that a lower part of the plane of main extension 303.10 is located closer to the end of the wagon body forming the head section 303.2 than an upper part of that plane of main extension 303.10. In other words, the upward facing side of the plane of main extension is also facing rearward. Such a configuration is particularly beneficial since it provides an advantageous flow pattern in the wake region of the vehicle.

However, it will be appreciated that, with other embodiments of the invention, the angle β may be chosen in the other direction (i.e. such that the downward facing side of the plane of main extension is facing rearward). Furthermore, the angle β may range from 30° to 90°, preferably ranging from 60° to 90°, more preferably ranging from 75° to 90°. By this means, especially beneficial results may be achieved.

Furthermore, with other embodiments of the invention, the flow separation edge may be an arbitrarily curved element as it is indicated by the dotted contour 314 in Figure 14. With this flow separation edge 314 any point of the flow separation edge 314.9 has a perpendicular distance to the plane of main extension 303.10 which is less than 10%, preferably less than 5%, of a maximum edge width (defined in accordance with the maximum edge width $Ws_{max}$ shown in Figure 6) of the flow separation edge 314.9 in the transverse direction (y-axis). By this means, a comparatively simple design having beneficial properties may be achieved.

Furthermore, the flow separation step 314 is formed with the first step wall element 314.11 being slightly inclined by an angle $a_1 = 7°$, such that the first step wall element 303.11 ascends towards the flow separation edge 303.9. This leads to a slightly upward inclination of the flow speed direction of the first airflow 106.1 (as it is indicated by arrow F in Figure 14) which is beneficial for guaranteeing the persistent flow separation. Finally, the second step wall element 314.12 is formed as a slightly curved element in a sectional plane perpendicular to the transverse direction (y-axis).

Fourth embodiment

With reference to Figure 15 a further preferred embodiment of a vehicle 401 according to the present invention will now be described in greater detail. The vehicle 401, in its basic design and functionality, largely corresponds to the vehicle 101 such that it will be mainly referred to the differences only. Moreover, identical or like components are given the same reference numerals increased by 300. Unless deviating explanations are given in the following it is here explicitly referred to the explanations given above with respect to the features and functions of these components.

The only difference of the vehicle 401 with respect to the vehicle 101 lies in the design of the flow separation step 403.8 of the vehicle module 402. As can be seen from Figure 15, the flow separation step 403.8 is formed as a multiply curved component showing a pronounced centrally located longitudinal protrusion 403.18 in the second step wall element 403.12.

Although the present invention in the foregoing has only been described in the context of double-deck rail vehicles, it will be appreciated that it may also be applied to any other type of vehicle, in particular single-deck rail vehicles in order to overcome similar problems with respect to the drag and slipstream behavior of the vehicle.

**Claims**

1.  A vehicle, in particular a rail vehicle, for a bidirectional operation at a travelling speed above 120 km/h, in particular above 160 km/h, in a respective direction of travel comprising

    - at least one vehicle module (102; 202; 302; 402) with a wagon body (103; 203; 303; 403) being supported on a running gear (104) adapted to run on a track (105) defining a track level;
    - said vehicle module (102; 202; 302; 402) defining a longitudinal direction, a transverse direction and a height direction;
    - said vehicle module (102; 202; 302; 402) having a vehicle height dimension above said track level in said height direction;
    - said wagon body (103; 203; 303; 403) having an outer skin (103.4; 203.4; 303.4; 403.4) and comprising a head section (103.2; 203.2; 303.2; 403.2) located at one of its ends;
    - said wagon body (103; 203; 303; 403), in a roof section of said wagon body (103; 203; 303; 403), having a flow separation section (103.6; 203.6; 303.6; 403.6) comprising a flow separation device (103.7; 203.7; 303.7; 403.7), in particular a flow separation edge (103.9; 203.9; 303.9; 403.9);
    - said flow separation device (103.7; 203.7; 303.7; 403.7) having a height extension in said vehicle height direction;
    - said flow separation device (103.7; 203.7; 303.7; 403.7) providing a persistent separation of an airflow (106) from said outer skin (103.4; 203.4; 303.4; 403.4) of said wagon body (103; 203; 303; 403) when said vehicle module (102; 202; 302; 402) runs at said travelling speed with said head section (103.2; 203.2; 303.2; 403.2) forming a trailing end of said vehicle module (102; 202; 302; 402);
    **characterized in that**
    - said flow separation device (103.7; 203.7; 303.7; 403.7) comprises a flow separation step (103.8; 203.8; 303.8;

403.8);

- said flow separation step (103.8; 203.8; 303.8; 403.8) comprising a flow separation edge (103.9; 203.9; 303.9; 403.9), a first step wall element (103.11; 203.11; 303.11; 403.11) and a second step wall element (103.12; 203.12; 303.12; 403.12);
- said flow separation edge (103.9; 203.9; 303.9; 403.9) being formed at a conjunction of said first step wall element (103.11; 203.11; 303.11; 403.11) and said second step wall element (103.12; 203.12; 303.12; 403.12);
- said second step wall element (103.12; 203.12; 303.12; 403.12) descending from said flow separation edge (103.9; 203.9; 303.9; 403.9) and being located on a side of said flow separation edge (103.9; 203.9; 303.9; 403.9) facing towards an end of said wagon body (103; 203; 303; 403) forming said head section (103.2; 203.2; 303.2; 403.2),
- said flow separation edge (103.9; 203.9; 303.9; 403.9) has at least one edge section defining a tangential direction in each point of said edge section; and
- said height extension of said flow separation device (103.7; 203.7; 303.7; 403.7) only ranging up to 30% of said vehicle height dimension, preferably from 2% to 30% of said vehicle height dimension, more preferably from 5% to 25% of said vehicle height dimension, even more preferably from 5% to 20% of said vehicle height dimension, of said vehicle module (102; 202; 302; 402) in said air flow separation section (103.6; 203.6; 303.6; 403.6).

2. The vehicle according to claim 1, wherein

- said flow separation edge (103.9; 203.9; 303.9; 403.9) defines a plane of main extension (103.10; 203.10; 303.10; 403.10) of said flow separation device (103.7; 203.7; 303.7; 403.7);
- said plane of main extension (103.10; 203.10; 303.10; 403.10) being substantially parallel to said transverse direction and inclined with respect to said longitudinal direction by a edge plane angle;
- said edge plane angle ranging from 30° to 90°, preferably ranging from 60° to 90°, more preferably ranging from 75° to 90°;
- in particular, said plane of main extension (103.10; 203.10; 303.10; 403.10) being arranged such that a lower part of said plane of main extension (103.10; 203.10; 303.10; 403.10) is located closer to an end of said wagon body (103; 203; 303; 403) forming said head section (103.2; 203.2; 303.2; 403.2) than an upper part of said plane of main extension (103.10; 203.10; 303.10; 403.10);

3. The vehicle according to claim 1 or 2, wherein

- said flow separation edge (103.9; 203.9; 303.9; 403.9) is a sharp flow separation edge (103.9; 203.9; 303.9; 403.9);
- said flow separation edge (103.9; 203.9; 303.9; 403.9), in said edge section and in a sectional plane perpendicular to said tangential direction, having a radius of curvature of less than 15 mm, preferably of less than 10 mm, more preferably of less than 5 mm;
- said edge section, in particular, extending over at least 60% of said flow separation edge (103.9; 203.9; 303.9; 403.9), preferably over at least 80% of said flow separation edge (103.9; 203.9; 303.9; 403.9), more preferably over substantially 100% of said flow separation edge (103.9; 203.9; 303.9; 403.9).

4. The vehicle according to any one of the preceding claims, wherein

- said flow separation edge (103.7; 203.7; 303.7; 403.7) extends, in particular substantially continuously extends, from one lateral surface to an opposing lateral surface of said wagon body (103; 203; 303; 403);
and/or
- said flow separation edge (103.9; 203.9; 303.9; 403.9) forms a permanently aerodynamically active component of said flow separation device (103.7; 203.7; 303.7; 403.7) or said flow separation edge forms a selectively aerodynamically activatable component of said flow separation device.

5. The vehicle according to any one of the preceding claims, wherein

- said first step wall element (103.11; 203.11; 303.11; 403.11) and said second step wall element (103.12; 203.12; 303.12; 403.12) are arranged such that

- said first step wall element (103.11; 203.11; 303.11; 403.11), in said edge section and at least in a first step wall portion adjacent to said flow separation edge (103.9; 203.9; 303.9; 403.9) as well as in a sectional plane perpendicular to said transverse direction, has a first angle of inclination from 10° to 0°, preferably from 7° to 0°, with respect to a direction parallel to said longitudinal direction;
and/or
- said second step wall element (103.12; 203.12; 303.12; 403.12), in said edge section and at least in a second step wall portion adjacent to said flow separation edge (103.9; 203.9; 303.9; 403.9) as well as in a sectional plane perpendicular to said transverse direction, has a second angle of inclination of at least 15°, preferably at least 20°, more preferably from 20° to 60°, with respect to a direction parallel to said longitudinal direction.

6. The vehicle according to any one of the preceding claims, wherein

- said flow separation edge (103.9; 203.9; 303.9; 403.9) and said outer skin (103.4; 203.4; 303.4; 403.4) of said head section (103.2; 203.2; 303.2; 403.2) define a tangent line;
- said tangent line, in a sectional plane perpendicular to said transverse direction, in particular in a sectional plane comprising a longitudinal axis (103.13; 203.13; 303.13; 403.13) of said wagon body (103.4; 203.4; 303.4; 403.4), intersecting said flow separation edge (103.9; 203.9; 303.9; 403.9) and being tangent to said outer skin (103.4; 203.4; 303.4; 403.4) at a tangent point located on a side of said flow separation edge (103.9; 203.9; 303.9; 403.9) facing towards an end of said wagon body (103; 203; 303; 403) forming said head section (103.2; 203.2; 303.2; 403.2);
- said tangent line having a tangent line angle of inclination of at least 15°, preferably at least 20°, more preferably from 20° to 60°, with respect to a direction parallel to said longitudinal direction.

7. The vehicle according to any one of the preceding claims, wherein

- said flow separation edge (103.9; 203.9; 303.9; 403.9) intersects an intersection line of a transverse first plane and a longitudinal second plane;
- said transverse first plane being perpendicular to said longitudinal direction;
- said longitudinal second plane being perpendicular to said transverse direction and comprising a longitudinal axis (103.13; 203.13; 303.13; 403.13) of said wagon body (103; 203; 303; 403);
- said outer skin (103.4; 203.4; 303.4; 403.4) and said transverse first plane defining a head volume V;
- an intersection contour of said outer skin (103.4; 203.4; 303.4; 403.4) and said transverse first plane defining an intersection contour length p, an intersection contour area A and a prismatic length $L_{prism}$;
- a hydraulic diameter $d_h$ of said wagon body (103; 203; 303; 403) in said transverse first plane being defined as

$$d_h = \frac{4 \cdot A}{p};$$

- said prismatic length $L_{prism}$ being defined as

$$L_{prism} = \frac{V}{A};$$

- said flow separation edge (103.9; 203.9; 303.9; 403.9), in said longitudinal direction being located such that a normalized prismatic length

$$l_{prism} = \frac{L_{prism}}{d_h}$$

is at most 1.75, preferably at most 1.5, more preferably ranges from 0.15 to 1.5.

8. The vehicle according to any one of the preceding claims, wherein

- said flow separation edge (103.9; 203.9; 303.9; 403.9) intersects an intersection line of a transverse first plane and a longitudinal second plane;
- said transverse first plane being perpendicular to said longitudinal direction;

- said longitudinal second plane being perpendicular to said transverse direction and comprising a longitudinal axis (103.13; 203.13; 303.13; 403.13) of said wagon body (103; 203; 303; 403);
- said outer skin (103.4; 203.4; 303.4; 403.4) and said transverse first plane defining a head volume V;
- an intersection contour of said outer skin (103.4; 203.4; 303.4; 403.4) and said transverse first plane defining an intersection contour length p, an intersection contour area A and a prismatic length $L_{prism}$;
- a hydraulic diameter $d_h$ of said wagon body (103; 203; 303; 403) in said transverse first plane being defined as

$$d_h = \frac{4 \cdot A}{p};$$

- said prismatic length $L_{prism}$ being defined as

$$L_{prism} = \frac{V}{A};$$

- said flow separation edge (103.9; 203.9; 303.9; 403.9) being located, in said longitudinal direction, in a region of transition from a prismatic part (103.1; 203.1; 303.1; 403.1) of said outer skin (103.4; 203.4; 303.4; 403.4) and a head section part (103.2; 203.2; 303.2; 403.2) of said outer skin (103.4; 203.4; 303.4; 403.4) deviating from said prismatic shape, said prismatic part (103.1; 203.1; 303.1; 403.1) of said outer skin (103.4; 203.4; 303.4; 403.4), in particular, being continued up to said flow separation edge (103.9; 203.9; 303.9; 403.9) in a height region defined by said flow separation edge (103.9; 203.9; 303.9; 403.9).

9. The vehicle according to any one of the preceding claims, wherein

- said flow separation edge (103.9; 203.9; 303.9; 403.9) intersects an intersection line of a transverse first plane and a longitudinal second plane;
- said transverse first plane being perpendicular to said longitudinal direction;
- said longitudinal second plane being perpendicular to said transverse axis and comprising a longitudinal axis (103.13; 203.13; 303.13; 403.13) of said wagon body (103; 203; 303; 403);
- a perpendicular projection of said flow separation edge (103.9; 203.9; 303.9; 403.9) onto said transverse first plane having a maximum edge width $Ws_{max}$ in said transverse direction and said outer skin (103.4; 203.4; 303.4; 403.4) in said transverse first plane having a maximum wagon body width $W_{max}$, said flow separation edge (103.9; 203.9; 303.9; 403.9) being arranged such that a normalized maximum edge width

$$ws_{max} = \frac{Ws_{max}}{W_{max}}$$

of said flow separation edge (103.9; 203.9; 303.9; 403.9) is at least 0.25, preferably at least 0.3, more preferably ranges from 0.3 to 1.0.

10. The vehicle according to any one of the preceding claims, wherein

- said flow separation edge (103.9; 203.9; 303.9; 403.9) intersects an intersection line of a transverse first plane and a longitudinal second plane;
- said transverse first plane being perpendicular to said longitudinal direction;
- said longitudinal second plane being perpendicular to said transverse axis and comprising a longitudinal axis (103.13; 203.13; 303.13; 403.13) of said wagon body (103; 203; 303; 403);
- said flow separation device (103.7; 203.7; 303.7; 403.7) comprising a flow separation step (103.8; 203.8; 303.8; 403.8) with a step wall element (103.12; 203.12; 303.12; 403.12) descending from said flow separation edge (103.9; 203.9; 303.9; 403.9) and defining, in said longitudinal second plane, a lower end (103.16) of said flow separation device (103.7; 203.7; 303.7; 403.7), said flow separation step (103.8; 203.8; 303.8; 403.8), in said height direction, having a step height Hs between said lower end (103.16) and said flow separation edge (103.9; 203.9; 303.9; 403.9) and said outer skin (103.4; 203.4; 303.4; 403.4), in said longitudinal second plane, having a wagon body height H, said flow separation step (103.8; 203.8; 303.8; 403.8) being arranged such that a normalized step height

$$hs = \frac{Hs}{H}$$

of said flow separation step (103.8; 203.8; 303.8; 403.8) is at least 0.005, preferably at least 0.01, more preferably ranges from 0.01 to 0.15.

**11.** The vehicle according to any one of the preceding claims, wherein

- said flow separation edge (103.9; 203.9; 303.9; 403.9) intersects an intersection line of a transverse first plane and a longitudinal second plane;
- said transverse first plane being perpendicular to said longitudinal direction;
- said longitudinal second plane being perpendicular to said transverse axis and comprising a longitudinal axis (103.13; 203.13; 303.13; 403.13) of said wagon body (103; 203; 303; 403);
- said flow separation device (103.7; 203.7; 303.7; 403.7) comprising a flow separation step (103.8; 203.8; 303.8; 403.8) with a step wall element (103.12; 203.12; 303.12; 403.12) descending from said flow separation edge (103.9; 203.9; 303.9; 403.9) and defining, in said longitudinal second plane, a lower end (103.16) of said flow separation device (103.7; 203.7; 303.7; 403.7), a perpendicular projection of said flow separation step (103.8; 203.8; 303.8; 403.8) onto said transverse first plane having a step area As and an intersection contour of said outer skin (103.4; 203.4; 303.4; 403.4) and said transverse first plane defining an intersection contour area A, said flow separation step (103.8; 203.8; 303.8; 403.8) being arranged such that a normalized step area

$$as = \frac{As}{A}$$

of said flow separation step (103.8; 203.8; 303.8; 403.8) is at least 0.003, preferably at least 0.005, more preferably ranges from 0.005 to 0.1.

**12.** The vehicle according to any one of the preceding claims, wherein

- said flow separation device (103.7; 203.7; 303.7; 403.7) is arranged such that said persistent separation of a first airflow (106.1) from said outer skin (103.4; 203.4; 303.4; 403.4) of said wagon body (103.8; 203.8; 303.8; 403.8) extends over a flow separation area of said outer skin (103.4; 203.4; 303.4; 403.4);
- said flow separation area being of sufficient size to generate a first rise in a static pressure distribution within said separated first airflow (106.1) and to at least reduce, in particular substantially avoid, the formation of two pronounced longitudinal wake vortices in a wake of said wagon body (103; 203; 303; 403);
- said first rise in said static pressure distribution within said separated airflow (106.1), in particular, being selected as a function of a static pressure distribution in an adjacent lateral second airflow (106.2) over a lateral part of said outer skin (103.4; 203.4; 303.4; 403.4) of said wagon body (103; 203; 303; 403) located adjacent to said flow separation device (103.7; 203.7; 303.7; 403.7);

**13.** The vehicle according to any one of the preceding claims, wherein

- said flow separation device (103.7; 203.7; 303.7; 403.7) is a first flow separation device located at a first end of said vehicle;
- a second flow separation device being located at an opposite second end of said vehicle;
- said second flow separation device, in particular, being substantially identical to said first flow separation device (103.7; 203.7; 303.7; 403.7).

**14.** The vehicle according to any one of the preceding claims, wherein said wagon body (103; 203; 303; 403) is a double-deck wagon body.

**15.** A method of aerodynamically optimizing a head section of a vehicle, in particular a rail vehicle, for a bidirectional operation at a travelling speed above 120 km/h, in particular above 160 km/h, in a respective direction of travel comprising,

- in a first step, providing an initial head section (107.1) showing an initial flow separation pattern when said vehicle runs at said travelling speed with said head section (107.1) forming a trailing end of said vehicle, said initial flow separation pattern comprising a formation of two pronounced longitudinal wake vortices (108.1, 108.2) in a wake of said vehicle; and,

- in a subsequent step, aerodynamically modifying said initial head section to provide a final head section (103.2; 203.2; 303.2; 403.2) having improved aerodynamic properties;

- in a second step, introducing a flow separation device (103.7; 203.7; 303.7; 403.7) in an upper region of said head section to form a vehicle according to any one of the preceding claims, thereby providing said modified head section, said flow separation device (103.7; 203.7; 303.7; 403.7) generating a modified flow separation pattern with a persistent separation of an airflow (106.1) from an outer skin (103.4; 203.4; 303.4; 403.4) of said vehicle at said flow separation device (103.7; 203.7; 303.7; 403.7) when said vehicle runs at said travelling speed with said head section forming said trailing end;

- in a third step, performing an aerodynamic analysis of said modified flow separation pattern for a formation of said pronounced longitudinal wake vortices in said wake of said vehicle; and,

- in a fourth step,

  - if said analysis in said previous third step reveals formation of said pronounced longitudinal wake vortices, in a first sub-step, modifying at least one structural parameter of said flow separation device (103.7; 203.7; 303.7; 403.7) to provide a further modified head section and repeating said third step and said fourth step; or,

  - if said analysis in said previous third step reveals no formation of said pronounced longitudinal wake vortices, in a second sub-step, using said modified head section analyzed in said previous third step as said final head section (103.2; 203.2; 303.2; 403.2);

- wherein, in particular, at least one of said first step, said second step, said third step and said fourth step is executed automatically using a previously established computerized aerodynamic model of said vehicle.

**Patentansprüche**

1. Fahrzeug, insbesondere Schienenfahrzeug, für einen bidirektionalen Betrieb bei einer Fahrgeschwindigkeit über 120 km/h, insbesondere über 160 km/h, in einer jeweiligen Fahrtrichtung, umfassend

   - mindestens ein Fahrzeugmodul (102; 202; 302; 402) mit einem Wagenkasten (103; 203; 303; 403), der auf einem Fahrwerk (104) abgestützt ist, das dazu ausgebildet ist, auf einem ein Gleisniveau definierenden Gleis (105) zu fahren; wobei
   - das Fahrzeugmodul (102; 202; 302; 402) eine Längsrichtung, eine Querrichtung und eine Höhenrichtung definiert;
   - das Fahrzeugmodul (102; 202; 302; 402) eine Fahrzeughöhenabmessung oberhalb des Gleisniveaus in der Höhenrichtung hat;
   - der Wagenkasten (103; 203; 303; 403) eine Außenhaut (103.4; 203.4; 303.4; 403.4) aufweist und einen Kopfabschnitt (103.2; 203.2; 303.2; 403.2) aufweist, der an einem seiner Enden angeordnet ist;
   - der Wagenkasten (103; 203; 303; 403), in einem Dachabschnitt des Wagenkastens (103; 203; 303; 403), einen Strömungsabrissabschnitt (103.6; 203.6; 303.6; 403.6) aufweist, der eine Strömungsabrissvorrichtung (103.7; 203.7; 303.7; 403.7) umfasst, insbesondere eine Strömungsabrisskante (103.9; 203.9; 303.9; 403.9) umfasst;
   - die Strömungsabrissvorrichtung (103.7; 203.7; 303.7; 403.7) eine Höhenausdehnung in der Fahrzeughöhenrichtung hat;
   - die Strömungsabrissvorrichtung (103.7; 203.7; 303.7; 403.7) eine dauerhafte Ablösung eines Luftstroms (106) von der Außenhaut (103.4; 203.4; 303.4; 403.4) des Wagenkastens (103; 203; 303; 403) bereitstellt, wenn das Fahrzeugmodul (102; 202; 302; 402) mit der Fahrgeschwindigkeit fährt, wobei der Kopfabschnitt (103.2; 203.2; 303.2; 403.2) ein nachlaufendes Ende des Fahrzeugmoduls (102; 202; 302; 402) bildet;
   **dadurch gekennzeichnet, dass**
   - die Strömungsabrissvorrichtung (103.7; 203.7; 303.7; 403.7) eine Strömungsabrissstufe (103.8; 203.8; 303.8; 403.8) umfasst; wobei
   - die Strömungsabrissstufe (103.8; 203.8; 303.8; 403.8) eine Strömungsabrisskante (103.9; 203.9; 303.9; 403.9), ein erstes Stufenwandelement (103.11; 203.11; 303.11; 403.11) und ein zweites Stufenwandelement (103,12; 203,12; 303,12; 403,12) umfasst;
   - die Strömungsabrisskante (103.9; 203.9; 303.9; 403.9) an einer Verbindung des ersten Stufenwandelements (103.11; 203.11; 303.11; 403.11) und des zweiten Stufenwandelements (103.12; 203.12; 303.12; 403.12) gebildet ist;

- das zweite Stufenwandelement (103.12; 203.12; 303.12; 403.12) von der Strömungsabrisskante (103.9; 203.9; 303.9; 403.9) absteigt und sich auf einer Seite der Strömungsabrisskante (103.9; 203.9; 303.9; 403.9) befindet, welche einem Ende des Wagenkastens (103; 203; 303; 403) zugewandt ist, das den Kopfabschnitt (103.2; 203.2; 303.2; 403.2) bildet,

- die Strömungsabrisskante (103.9; 203.9; 303.9; 403.9) mindestens einen Kantenabschnitt aufweist, der in jedem Punkt des Kantenabschnitts eine tangentiale Richtung definiert; und

- wobei die Höhenausdehnung der Strömungsabrissvorrichtung (103.7; 203.7; 303.7; 403.7) nur bis zu 30% der Fahrzeughöhenabmessung, vorzugsweise von 2% bis 30% der Fahrzeughöhenabmessung, weiter vorzugsweise von 5% bis 25% der Fahrzeughöhenabmessung reicht, weiter vorzugsweise von 5% bis 20% der Fahrzeughöhenabmessung des Fahrzeugmoduls (102; 202; 302; 402) in dem Strömungsabrissabschnitt (103.6; 203.6; 303.6; 403.6) reicht.

2.  Fahrzeug nach Anspruch 1, wobei

- die Strömungsabrisskante (103.9; 203.9; 303.9; 403.9) eine Haupterstreckungsebene (103.10; 203.10; 303.10; 403.10) der Strömungsabrissvorrichtung (103.7; 203.7; 303.7; 403.7) definiert;

- die Haupterstreckungsebene (103.10; 203.10; 303.10; 403.10) im Wesentlichen parallel zu der Querrichtung ist und in Bezug auf die Längsrichtung um einen Kantenebenenwinkel geneigt ist;

- der Kantenebenenwinkel im Bereich von 30° bis 90° liegt, vorzugsweise im Bereich von 60° bis 90° liegt, weiter vorzugsweise im Bereich von 75° bis 90° liegt;

- insbesondere die Haupterstreckungsebene (103.10; 203.10; 303.10; 403.10) so angeordnet ist, dass ein unterer Teil der Haupterstreckungsebene (103.10; 203.10; 303.10; 403.10) näher an einem Ende des Wagenkastens (103; 203; 303; 403) angeordnet ist, das den Kopfabschnitt (103.2; 203.2; 303.2; 403.2) bildet, als ein oberer Teil der Haupterstreckungsebene (103.10; 203.10; 303.10; 403.10);

3.  Fahrzeug nach Anspruch 1 oder 2, wobei

- die Strömungsabrisskante (103.9; 203.9; 303.9; 403.9) eine scharfe Strömungsabrisskante (103.9; 203.9; 303.9; 403.9) ist;

- die Strömungsabrisskante (103.9; 203.9; 303.9; 403.9) in dem Kantenabschnitt und in einer Schnittebene senkrecht zu der Tangentialrichtung einen Krümmungsradius von weniger als 15 mm, vorzugsweise von weniger als 10 mm, weiter vorzugsweise von weniger als 5 mm, aufweist;

- sich der Kantenabschnitt insbesondere über mindestens 60% der Strömungsabrisskante (103.9; 203.9; 303.9; 403.9), vorzugsweise über mindestens 80% der Strömungsabrisskante (103.9; 203.9; 303.9; 403.9); weiter vorzugsweise über im Wesentlichen 100% der Strömungsabrisskante (103.9; 203.9; 303.9; 403.9), erstreckt.

4.  Fahrzeug nach einem der vorhergehenden Ansprüche, wobei

- die Strömungsabrisskante (103.7; 203.7; 303.7; 403.7) von einer Seitenfläche zu einer gegenüberliegenden Seitenfläche des Wagenkastens (103; 203; 303; 403) verläuft, insbesondere im Wesentlichen kontinuierlich verläuft;
und/oder

- die Strömungsabrisskante (103.9; 203.9; 303.9; 403.9) eine permanent aerodynamisch aktive Komponente der Strömungsabrissvorrichtung (103.7; 203.7; 303.7; 403.7) bildet oder die Strömungsabrisskante eine selektiv aerodynamisch aktivierbare Komponente der Strömungsabrissvorrichtung bildet.

5.  Fahrzeug nach einem der vorhergehenden Ansprüche, wobei

- das erste Stufenwandelement (103.11; 203.11; 303.11; 403.11) und das zweite Stufenwandelement (103.12; 203.12; 303.12; 403.12) derart angeordnet sind, dass

- das erste Stufenwandelement(103.11; 203.11; 303.11; 403.11), in dem Kantenabschnitt und mindestens in einem ersten Stufenwandabschnitt neben der Strömungsabrisskante (103.9; 203.9; 303.9; 403.9) sowie in einer Schnittebene senkrecht zu der Querrichtung, einen ersten Neigungswinkel von 10° bis 0°, vorzugsweise von 7° bis 0°, in Bezug auf eine Richtung aufweist, die parallel zu der Längsrichtung ist;
und/oder

- das zweite Stufenwandelement (103.12; 203.12; 303.12; 403.12), in dem Kantenabschnitt und mindestens in einem zweiten Stufenwandabschnitt neben der Strömungsabrisskante (103.9; 203.9; 303.9; 403.9) sowie in einer Schnittebene senkrecht zu der Querrichtung, einen zweiten Neigungswinkel von mindestens 15°, vorzugsweise von mindestens 20°, weiter vorzugsweise von 20° bis 60°, in Bezug auf eine Richtung, die parallel zu der Längsrichtung ist, hat;

6. Fahrzeug nach einem der vorhergehenden Ansprüche, wobei

- die Strömungsabrisskante (103.9; 203.9; 303.9; 403.9) und die Außenhaut (103.4; 203.4; 303.4; 403.4) des Kopfabschnitts (103.2; 203.2; 303.2; 403.2) eine Tangentenlinie definieren;
- die Tangentenlinie, in einer Schnittebene senkrecht zur Querrichtung, insbesondere in einer Schnittebene, die eine Längsachse (103.13; 203.13; 303.13; 403.13) des Wagenkastens (103.4; 203.4; 303.4; 403.4) umfasst, die Strömungsabrisskante (103.9; 203.9; 303.9; 403.9) schneidet und tangential zur Außenhaut (103.4; 203.4; 303.4; 403.4) an einem Tangentenpunkt ist, der sich auf einer Seite der Strömungsabrisskante (103.9; 203.9; 303.9; 403.9) befindet, welche einem Ende des Wagenkastens (103; 203; 303; 403) zugewandt ist, die den Kopfabschnitt (103.2; 203.2; 303.2; 403.2) bildet;
- die Tangentenlinie einen Tangentenlinienneigungswinkel von mindestens 15°, vorzugsweise von mindestens 20°, weiter vorzugsweise von 20° bis 60°, in Bezug auf eine Richtung parallel zu der Längsrichtung, aufweist.

7. Fahrzeug nach einem der vorhergehenden Ansprüche, wobei

- die Strömungsabrisskante (103.9; 203.9; 303.9; 403.9) eine Schnittlinie einer transversalen ersten Ebene und einer longitudinalen zweiten Ebene schneidet;
- die transversale erste Ebene senkrecht zu der Längsrichtung ist;
- die longitudinale zweite Ebene senkrecht zu der Querrichtung ist und eine Längsachse (103.13; 203.13; 303.13; 403.13) des Wagenkastens (103; 203; 303; 403) umfasst;
- die Außenhaut (103.4; 203.4; 303.4; 403.4) und die transversale erste Ebene ein Kopfvolumen V definieren;
- eine Schnittkontur der Außenhaut (103.4; 203.4; 303.4; 403.4) und die transversale erste Ebene eine Schnittkonturlänge p, eine Schnittkonturfläche A und eine prismatische Länge $L_{prism}$ definieren;
- ein hydraulischer Durchmesser $d_h$ des Wagenkastens (103; 203; 303; 403) in der transversalen ersten Ebene als

$$d_h = \frac{4 \cdot A}{p}$$

definiert ist;
- die prismatische Länge als

$$L_{prism} = \frac{V}{A}$$

definiert ist;
- die Strömungsabrisskante (103.9; 203.9; 303.9; 403.9) in der Längsrichtung so angeordnet ist, dass sie eine normalisierte prismatische Länge

$$l_{prism} = \frac{L_{prism}}{d_h}$$

hat, die höchstens 1.75 beträgt, vorzugsweise höchstens 1.5 beträgt, weiter vorzugsweise im Bereich von 0.15 bis 1.5 liegt.

8. Fahrzeug nach einem der vorhergehenden Ansprüche, wobei

- die Strömungsabrisskante (103.9; 203.9; 303.9; 403.9) eine Schnittlinie einer transversalen ersten Ebene und einer longitudinalen zweiten Ebene schneidet;

- die transversale erste Ebene senkrecht zu der Längsrichtung ist;
- die longitudinale zweite Ebene senkrecht zu der Querrichtung ist und eine Längsachse (103.13; 203.13; 303.13; 403.13) des Wagenkastens (103; 203; 303; 403) umfasst;
- die Außenhaut (103.4; 203.4; 303.4; 403.4) und die transversale erste Ebene ein Kopfvolumen V definieren;
- eine Schnittkontur der Außenhaut (103.4; 203.4; 303.4; 403.4) und die transversale erste Ebene eine Schnittkonturlänge p, einen Schnittkonturbereich A und eine prismatische Länge $L_{prism}$ definieren;
- ein hydraulischer Durchmesser $d_h$ des Wagenkastens (103; 203; 303; 403) in der transversalen ersten Ebene als

$$d_h = \frac{4 \cdot A}{p}$$

definiert ist;
- die prismatische Länge als

$$L_{prism} = \frac{V}{A}$$

definiert ist;
- die Strömungsabrisskante (103.9; 203.9; 303.9; 403.9) in der Längsrichtung in einem Übergangsbereich von einem prismatischen Teil (103.1; 203.1; 303.1; 403.1) der Außenhaut (103.4; 203.4; 303.4; 403.4) und einem Kopfabschnittsteil (103.2; 203.2; 303.2; 403.2) der Außenhaut (103.4; 203.4; 303.4; 403.4), der von der prismatischen Form abweicht, angeordnet ist, wobei der prismatische Teil (103.1; 203.1; 303.1; 403.1) der Außenhaut (103.4; 203.4; 303.4; 403.4) insbesondere bis zu der Strömungsabrisskante (103.9; 203.9; 303.9; 403.9) in einem Höhenbereich fortgesetzt ist, der durch die Strömungsabrisskante (103.9; 203.9; 303.9; 403.9) definiert ist.

**9.** Fahrzeug nach einem der vorhergehenden Ansprüche, wobei

- die Strömungsabrisskante (103.9; 203.9; 303.9; 403.9) eine Schnittlinie einer transversalen ersten Ebene und einer longitudinalen zweiten Ebene schneidet;
- die transversale erste Ebene senkrecht zu der Längsrichtung ist;
- die longitudinale zweite Ebene senkrecht zu der Querrichtung ist und eine Längsachse (103.13; 203.13; 303.13; 403.13) des Wagenkastens (103; 203; 303; 403) umfasst;
- eine senkrechte Projektion der Strömungsabrisskante (103.9; 203.9; 303.9; 403.9) auf die transversale erste Ebene eine maximale Kantenbreite $Ws_{max}$ in der Querrichtung aufweist und die Außenhaut (103.4; 203.4; 303.4; 403.4) in der transversalen ersten Ebene eine maximale Wagenkörperbreite $W_{max}$ aufweist, wobei die Strömungsabrisskante (103.9; 203.9; 303.9; 403.9) derart angeordnet ist, dass eine normalisierte maximale Kantenbreite

$$WS_{max} = \frac{Ws_{max}}{W_{max}}$$

der Strömungsabrisskante (103,9; 203,9; 303,9; 403,9) mindestens 0.25 beträgt, vorzugsweise mindestens 0.3 beträgt, weiter vorzugsweise im Bereich von 0.3 bis 1.0 liegt.

**10.** Fahrzeug nach einem der vorhergehenden Ansprüche, wobei

- die Strömungsabrisskante (103.9; 203.9; 303.9; 403.9) eine Schnittlinie einer transversalen ersten Ebene und einer longitudinalen zweiten Ebene schneidet;
- die transversale erste Ebene senkrecht zu der Längsrichtung ist;
- die longitudinale zweite Ebene senkrecht zu der Querrichtung ist und eine Längsachse (103.13; 203.13; 303.13; 403.13) des Wagenkastens (103; 203; 303; 403) umfasst;
- die Strömungsabrissvorrichtung (103.7; 203.7; 303.7; 403.7) eine Strömungsabrissstufe(103.8; 203.8; 303.8; 403.8) mit einem Stufenwandelement (103.12; 203.12; 303.12; 403.12) umfasst, das von der Strömungsabrisskante (103.9; 203,9; 303,9; 403,9) absteigt und in der longitudinalen zweiten Ebene ein unteres Ende (103.16) der Strömungsabrissvorrichtung (103.7; 203.7; 303.7; 403.7) definiert, wobei die Strömungsabrissstufe (103.8; 203.8; 303.8; 403.8) in der Höhenrichtung eine Stufenhöhe $H_s$ zwischen dem unteren Ende (103.16) und der Strömungsabrisskante (103.9; 203.9; 303.9; 403.9) aufweist und die Außenhaut (103.4; 203.4; 303.4; 403.4) in der longitudinalen zweiten Ebene eine Wagenkastenhöhe H aufweist, wobei die Strömungsabrissstufe (103.8; 203.8; 303.8; 403.8) derart angeordnet ist, dass eine normalisierte Stufenhöhe

$$hs = \frac{Hs}{H}$$

der Strömungsabrissstufe (103,8; 203,8; 303,8; 403,8) mindestens 0.005 beträgt, vorzugsweise mindestens 0.01 beträgt, weiter vorzugsweise im Bereich von 0.01 bis 0.15 liegt.

**11.** Fahrzeug nach einem der vorhergehenden Ansprüche, wobei

- die Strömungsabrisskante (103.9; 203.9; 303.9; 403.9) eine Schnittlinie einer transversalen ersten Ebene und einer longitudinalen zweiten Ebene schneidet;
- die transversale erste Ebene senkrecht zu der Längsrichtung ist;
- die longitudinale zweite Ebene senkrecht zu der Querrichtung ist und eine Längsachse (103.13; 203.13; 303.13; 403.13) des Wagenkastens (103; 203; 303; 403) umfasst;
- die Strömungsabrissvorrichtung (103.7; 203.7; 303.7; 403.7) eine Strömungsabrissstufe(103.8; 203.8; 303.8; 403.8) mit einem Stufenwandelement (103.12; 203.12; 303.12; 403.12) umfasst, das von der Strömungsabrisskante (103.9; 203,9; 303,9; 403,9) absteigt und in der longitudinalen zweiten Ebene ein unteres Ende (103.16) der Strömungsabrissvorrichtung (103.7; 203.7; 303.7; 403.7) definiert, wobei eine senkrechte Projektion der Strömungsabrissstufe (103.8; 203.8; 303.8; 403.8) auf die transversale erste Ebene eine Stufenfläche As aufweist und eine Schnittkontur der Außenhaut (103.4; 203.4; 303.4; 403.4) und die transversale erste Ebene eine Schnittkonturfläche A definieren, wobei die Strömungsabrissstufe (103.8; 203.8; 303.8; 403.8) derart angeordnet ist, dass eine normalisierte Stufenfläche

$$as = \frac{As}{A}$$

der Strömungsabrissstufe (103.8; 203.8; 303.8; 403.8) mindestens 0.003 beträgt, vorzugsweise mindestens 0.005 beträgt, weiter vorzugsweise im Bereich von 0.005 bis 0.1 liegt.

**12.** Fahrzeug nach einem der vorhergehenden Ansprüche, wobei

- die Strömungsabrissvorrichtung (103.7; 203.7; 303.7; 403.7) derart angeordnet ist, dass sich die dauerhafte Trennung eines ersten Luftstroms (106.1) von der Außenhaut (103.4; 203.4; 303.4; 403.4) des Wagenkastens (103.8; 203.8; 303.8; 403.8) über einen Strömungsabrissbereich der Außenhaut (103.4; 203.4; 303.4; 403.4) erstreckt;
- der Strömungsabrissbereich ausreichend groß ist, um einen ersten Anstieg einer statischen Druckverteilung innerhalb des getrennten ersten Luftstroms (106.1) zu erzeugen und um die Formation von zwei ausgeprägten longitudinalen Wirbelschleppen in einem Nachlauf des Wagenkastens (103; 203; 303; 403) zu verringern, insbesondere im Wesentlichen zu vermeiden;
- wobei der erste Anstieg der statischen Druckverteilung innerhalb des getrennten Luftstroms (106.1) insbesondere als Funktion einer statischen Druckverteilung in einem benachbarten seitlichen zweiten Luftstrom (106.2) über einem seitlichen Teil der Außenhaut (103.4; 203.4; 303,4; 403,4) des Wagenkastens (103; 203; 303; 403) gewählt ist, der zu der Strömungsabrissvorrichtung (103,7; 203,7; 303,7; 403,7) benachbart ist;

**13.** Fahrzeug nach einem der vorhergehenden Ansprüche, wobei

- die Strömungsabrissvorrichtung (103.7; 203.7; 303.7; 403.7) eine erste Strömungsabrissvorrichtung ist, die an einem ersten Ende des Fahrzeugs angeordnet ist;
- eine zweite Strömungsabrissvorrichtung an einem entgegengesetzten zweiten Ende des Fahrzeugs angeordnet ist;

- die zweite Strömungsabrissvorrichtung insbesondere im Wesentlichen identisch mit der ersten Strömungsabrissvorrichtung (103.7; 203.7; 303.7; 403.7) ist.

14. Fahrzeug nach einem der vorhergehenden Ansprüche, wobei der Wagenkasten (103; 203; 303; 403) ein Doppelstockwagenkasten ist.

15. Verfahren zum aerodynamischen Optimieren eines Kopfabschnitts eines Fahrzeugs, insbesondere eines Schienenfahrzeugs, für einen bidirektionalen Betrieb bei einer Fahrgeschwindigkeit über 120 km/h, insbesondere über 160 km/h, in einer jeweiligen Fahrtrichtung, bei dem

- in einem ersten Schritt ein initialer Kopfabschnitt (107.1) bereitgestellt wird, der ein initiales Strömungsabrissmuster zeigt, wenn das Fahrzeug mit der Fahrgeschwindigkeit fährt, wobei der Kopfabschnitt (107.1) ein nachlaufendes Ende des Fahrzeugs bildet, wobei das initiale Strömungsabrissmuster die Bildung von zwei ausgeprägten longitudinalen Wirbelschleppen in einem Nachlauf des Fahrzeugs umfasst; und,
- in einem nachfolgenden Schritt der initiale Kopfabschnitt aerodynamisch modifiziert wird, um einen finalen Kopfabschnitt (103.2; 203.2; 303.2; 403.2) mit verbesserten aerodynamischen Eigenschaften bereitzustellen;
- in einem zweiten Schritt eine Strömungsabrissvorrichtung (103.7; 203.7; 303.7; 403.7) in einem oberen Bereich des Kopfabschnitts eingeführt wird, um ein Fahrzeug nach einem der vorhergehenden Ansprüche zu bilden, wodurch der modifizierte Kopfabschnitt bereitgestellt wird, wobei die Strömungsabrissvorrichtung (103.7; 203.7; 303.7; 403.7) ein modifiziertes Strömungsabrissmuster mit einer dauerhaften Ablösung eines Luftstroms (106.1) von einer Außenhaut (103.4; 203.4; 303.4; 403.4) des Fahrzeugs an der Strömungsabrissvorrichtung (103.7; 203,7; 303,7; 403,7) erzeugt, wenn das Fahrzeug mit der Fahrgeschwindigkeit fährt, wobei der Kopfabschnitt das nachlaufende Ende bildet;
- in einem dritten Schritt eine aerodynamische Analyse des modifizierten Strömungsabrissmusters hinsichtlich der Bildung der ausgeprägten longitudinalen Wirbelschleppen in dem Nachlauf des Fahrzeugs durchgeführt wird; und,
- in einem vierten Schritt

- falls die Analyse in dem vorherigen dritten Schritt die Formation der ausgeprägten longitudinalen Wirbelschleppen zeigt, in einem ersten Unterschritt mindestens ein Strukturparameter der Strömungsabrissvorrichtung (103.7; 203.7; 303.7; 403.7) modifiziert wird, um einen weiteren modifizierten Kopfabschnitt bereitzustellen und den dritten Schritt und den vierten Schritt zu wiederholen;
oder,
- falls die Analyse in dem vorherigen dritten Schritt keine Formation der ausgeprägten longitudinalen Wirbelschleppen zeigt, in einem zweiten Unterschritt den modifizierten Kopfabschnitt, der in dem vorherigen dritten Schritt als finaler Kopfabschnitt (103.2; 203.2; 303.2; 403.2) analysiert wurde, zu verwenden;

- wobei insbesondere mindestens einer von dem ersten Schritt, dem zweiten Schritt, dem dritten Schritt und dem vierten Schritt automatisch unter Verwendung eines zuvor erstellten computerisierten aerodynamischen Modells des Fahrzeugs ausgeführt wird.

**Revendications**

1. Véhicule, en particulier véhicule ferroviaire, fonctionnant dans les deux sens à une vitesse de déplacement supérieure à 120 km/h, en particulier supérieure à 160 km/h, dans une direction de déplacement respective, comprenant:

- au moins un module de véhicule (102; 202; 302 ; 402) avec un corps de wagon (103; 203; 303; 403) supporté sur un train de roulement (104) adapté pour rouler sur une voie (105) définissant un niveau de voie;
- ledit module de véhicule (102; 202; 302; 402) définissant une direction longitudinale, une direction transversale et une direction de hauteur;
- ledit module de véhicule (102; 202; 302; 402) ayant une dimension de hauteur de véhicule au-dessus dudit niveau de voie dans ladite direction de hauteur;
- ledit corps de wagon (103; 203; 303; 403) ayant une peau extérieure (103.4; 203.4; 303.4; 403.4) et comprenant une section de tête (103.2; 203.2; 303.2; 403.2) situé à l'une de ses extrémités;
- ledit corps de wagon (103; 203; 303; 403), dans une section de toit dudit corps de wagon (103; 203; 303; 403), ayant une section de séparation de flux (103.6; 203.6; 303.6; 403.6) comprenant un dispositif de séparation de flux (103,7; 203,7; 303,7; 403,7), en particulier une arête de séparation de flux (103,9; 203,9; 303,9; 403,9);

- ledit dispositif de séparation de flux (103.7; 203.7; 303.7; 403.7) ayant une extension en hauteur dans ladite direction de hauteur du véhicule;
- ledit dispositif de séparation de flux (103.7; 203.7; 303.7; 403.7) fournissant une séparation persistante d'un flux d'air (106) à partir de ladite peau extérieure (103.4; 203.4; 303.4; 403.4) dudit corps de wagon (103; 203; 303; 403) lorsque ledit module de véhicule (102; 202; 302; 402) fonctionne à ladite vitesse de déplacement, ladite section de tête (103.2; 203.2; 303.2; 403.2) formant une extrémité arrière dudit module de véhicule (102; 202; 302; 402);

**caractérisé en ce que**:

- ledit dispositif de séparation de flux (103.7; 203.7; 303.7; 403.7) comprend une marche de séparation de flux (103.8; 203.8; 303.8; 403.8);
- ladite marche de séparation de flux (103.8; 203.8; 303.8; 403.8) comprenant une arête de séparation de flux (103.9; 203.9; 303.9; 403.9), un premier élément de paroi de marche (103.11; 203.11; 303.11; 403.11) et un second élément de paroi de marche (103); 103.12; 203.12; 303.12; 403.12);
- ladite arête de séparation de flux (103.9; 203.9; 303.9; 403.9) est formé au niveau d'une conjonction dudit premier élément de paroi de marche (103.11; 203.11; 303.11; 403.11) et dudit deuxième élément de paroi de marche (103.12; 203.12; 303.12; 403.12);
- ledit second élément de paroi de marche (103.12; 203.12; 303.12; 403.12) descendant de ladite arête de séparation de flux (103.9; 203.9; 303.9; 403.9) et étant situé sur un côté de ladite arête de séparation de flux (103.9; 203.9; 303.9; 403.9) tourné vers une extrémité dudit corps de wagon (103; 203; 303; 403) formant ladite section de tête (103.2; 203.2; 303.2; 403.2);
- ladite arête de séparation de flux (103.9; 203.9; 303.9; 403.9) ayant au moins une section d'arête définissant une direction tangentielle en chaque point de ladite section d'arête;
- ladite extension en hauteur dudit dispositif de séparation de flux (103.7; 203.7; 303.7; 403.7) allant seulement jusqu'à 30% de ladite dimension en hauteur du véhicule, de préférence de 2% à 30% de ladite dimension en hauteur du véhicule, de manière davantage préférée de 5% jusqu'à 25% de ladite dimension de hauteur du véhicule, encore plus préférablement de 5% à 20% de ladite dimension de hauteur du véhicule, dudit module de véhicule (102; 202; 302; 402) dans ladite section de séparation de flux d'air (103.6; 203.6; 303.6; 403,6).

**2.** Véhicule selon la revendication 1, dans lequel:

- ladite arête de séparation de flux (103.9; 203.9; 303.9; 403.9) définit un plan d'extension principale (103.10; 203.10; 303.10; 403.10) dudit dispositif de séparation de flux (103.7; 203.7; 303.7; 403.7);
- ledit plan d'extension principale (103.10; 203.10; 303.10; 403.10) étant sensiblement parallèle à ladite direction transversale et incliné par rapport à ladite direction longitudinale d'un premier angle de plan d'arête;
- ledit premier angle de plan d'arête allant de 30° à 90°, de préférence de 60° à 90°, plus préférablement de 75° à 90°;
- en particulier, ledit plan d'extension principale (103.10; 203.10; 303.10; 403.10) est disposé de telle sorte qu'une partie inférieure dudit plan d'extension principale (103.10; 203.10; 303.10; 403.10) est située plus près d'une extrémité dudit corps de wagon (103; 203; 303; 403) formant ladite section de tête (103.2; 203.2; 303.2; 403.2) qu'une partie supérieure dudit plan d'extension principale (103.10; 203.10; 303.10; 403.10).

**3.** Véhicule selon la revendication 1 ou 2, dans lequel

- ladite arête de séparation de flux (103.9; 203.9; 303.9; 403.9) est une arête de séparation de flux aiguë (103.9; 203.9; 303.9; 403.9);
- ladite arête de séparation de flux (103.9; 203.9; 303.9; 403.9), dans ladite section d'arête et dans un plan de coupe perpendiculaire à ladite direction tangentielle, ayant un rayon de courbure inférieur à 15 mm, de préférence inférieur à 10 mm, de manière davantage préférée de moins de 5 mm;
- ladite section d'arête, en particulier, s'étendant sur au moins 60% de ladite arête de séparation de flux (103.9; 203.9; 303.9; 403.9), de préférence sur au moins 80% de ladite arête de séparation de flux (103.9; 203.9; 303.9; 403.9), plus préférablement sur sensiblement 100% de ladite arête de séparation de flux (103,9; 203,9; 303,9; 403,9).

**4.** Véhicule selon l'une quelconque des revendications précédentes, dans lequel

- ladite arête de séparation de flux (103.7; 203.7; 303.7; 403.7) s'étendant, en particulier de manière sensiblement continue, d'une surface latérale à une surface latérale opposée dudit corps de wagon (103; 203; 303; 403); et/ou

- ladite arête de séparation de flux (103.9; 203.9; 303.9; 403.9) formant un composant aérodynamiquement actif en permanence dudit dispositif de séparation de flux (103.7; 203.7; 303.7; 403.7) ou ladite arête de séparation de flux formant un composant dudit dispositif de séparation de flux pouvant être aérodynamiquement activé de manière sélective.

**5.** Véhicule selon l'une quelconque des revendications précédentes, dans lequel

- ledit premier élément de paroi de marche (103.11; 203.11; 303.11; 403.11) et ledit deuxième élément de paroi de marche (103.12; 203.12; 303.12; 403.12) sont agencés de telle sorte que

- ledit premier élément de paroi de marche (103.11; 203.11; 303.11; 403.11), dans ladite section d'arête et au moins dans une première partie de paroi de marche adjacente à ladite arête de séparation de flux (103.9; 203.9; 303.9; 403.9) ainsi que dans un plan de coupe perpendiculaire à ladite direction tangentielle, présente un premier angle d'inclinaison de 10° à 0°, de préférence de 7° à 0°, par rapport à une direction parallèle à ladite direction longitudinale;
et/ou
- ledit deuxième élément de paroi de marche (103.12; 203.12; 303.12; 403.12), dans ladite section d'arête et au moins dans une seconde partie de paroi de marche adjacente à ladite arête de séparation de flux (103.9; 203.9; 303.9; 403.9) ainsi que dans un plan de coupe perpendiculaire à ladite direction tangentielle, a un deuxième angle d'inclinaison d'au moins 15°, de préférence d'au moins 20°, de manière davantage préférée de 20° à 60°, par rapport à une direction parallèle à ladite direction longitudinale.

**6.** Véhicule selon l'une quelconque des revendications précédentes, dans lequel

- ladite arête de séparation de flux (103.9; 203.9; 303.9; 403.9) et ladite peau extérieure (103.4; 203.4; 303.4; 403.4) de ladite section de tête (103.2; 203.2; 303.2; 403.2) définissent une ligne tangente;
- ladite ligne tangente, dans un plan de coupe perpendiculaire à ladite direction transversale, en particulier dans un plan de coupe comprenant un axe longitudinal (103.13; 203.13; 303.13; 403.13) dudit corps de wagon (103.4; 203.4; 303.4; 403.4), coupant ladite arête de séparation de flux (103.9; 203.9; 303.9; 403.9) et étant tangent à ladite peau externe (103.4; 203.4; 303.4; 403.4) en un point tangent situé sur un côté de ladite arête de séparation de flux (103.9; 203.9; 303.9; 403.9) tourné vers une extrémité dudit corps de wagon (103; 203; 303; 403) formant ladite section de tête (103.2; 203.2; 303.2; 403.2);
- ladite ligne tangente ayant un troisième angle d'inclinaison de ligne tangente d'au moins 15°, de préférence d'au moins 20°, de manière davantage préférée de 20° à 60°, par rapport à une direction parallèle à ladite direction longitudinale.

**7.** Véhicule selon l'une quelconque des revendications précédentes, dans lequel

- ladite arête de séparation de flux (103.9; 203.9; 303.9; 403.9) coupe une ligne d'intersection d'un premier plan transversal et d'un second plan longitudinal;
- ledit premier plan transversal étant perpendiculaire à ladite direction longitudinale;
- ledit second plan longitudinal est perpendiculaire à ladite direction transversale et comprend un axe longitudinal (103.13; 203.13; 303.13; 403.13) dudit corps de wagon (103; 203; 303; 403);
- ladite peau extérieure (103.4; 203.4; 303.4; 403.4) et ledit premier plan transversal définissant un volume de tête V;
- un contour d'intersection de ladite peau extérieure (103.4; 203.4; 303.4; 403.4) et dudit premier plan transversal définissant une longueur de contour d'intersection p, une surface de contour d'intersection A et une longueur prismatique $L_{prism}$;
- un diamètre hydraulique $d_h$ dudit corps de wagon (103; 203; 303; 403) dans ledit premier plan transversal étant défini comme

$$d_h = \frac{4 \cdot A}{p}$$

- ladite longueur prismatique $L_{prism}$ étant définie comme

$$L_{prism} = \frac{V}{A}$$

- ladite arête de séparation de flux (103,9; 203,9; 303,9; 403,9), dans ladite direction longitudinale, étant situé de telle sorte qu'une longueur prismatique normalisée

$$l_{prism} = \frac{L_{prism}}{d_h}$$

est d'au plus 1,75, de préférence d'au plus 1,5, plus préférablement de 0,15 à 1,5.

**8.** Véhicule selon l'une quelconque des revendications précédentes, dans lequel

- ladite arête de séparation de flux (103.9; 203.9; 303.9; 403.9) coupe une ligne d'intersection d'un premier plan transversal et d'un second plan longitudinal;
- ledit premier plan transversal étant perpendiculaire à ladite direction longitudinale;
- ledit second plan longitudinal est perpendiculaire à ladite direction transversale et comprend un axe longitudinal (103.13; 203.13; 303.13; 403.13) dudit corps de wagon (103; 203; 303; 403);
- ladite peau extérieure (103.4; 203.4; 303.4; 403.4) et ledit premier plan transversal définissant un volume de tête V;
- un contour d'intersection de ladite peau extérieure (103.4; 203.4; 303.4; 403.4) et dudit premier plan transversal définissant une longueur de contour d'intersection p, une surface de contour d'intersection A et une longueur prismatique L_{prism};
- un diamètre hydraulique $d_h$ dudit corps de wagon (103; 203; 303; 403) dans ledit premier plan transversal étant défini comme

$$d_h = \frac{4 \cdot A}{p}$$

- ladite longueur prismatique L_{prism} étant définie comme

$$L_{prism} = \frac{V}{A};$$

- ladite arête de séparation de flux (103.9; 203.9; 303.9; 403.9) est situé, dans ladite direction longitudinale, dans une région de transition d'une partie prismatique (103.1; 203.1; 303.1; 403.1) de ladite peau extérieure (103.4; 203.4; 303.4; 403.4) à une partie de section de tête (103.2; 203.2; 303.2; 403.2) de ladite peau extérieure (103.4; 203.4; 303.4; 403.4) s'écartant de ladite forme prismatique, ladite partie prismatique (103.1; 203.1; 303.1; 303.1; 403.1) de ladite peau extérieure (103.4; 203.4; 303.4; 403.4), en particulier, continuant jusqu'à ladite arête de séparation de flux (103.9; 203.9; 303.9; 403.9) dans une zone de hauteur définie par ladite arête de séparation de flux (103.9; 203.9; 203.9; 203.9; 303,9; 403,9).

**9.** Véhicule selon l'une quelconque des revendications précédentes, dans lequel

- ladite arête de séparation de flux (103.9; 203.9; 303.9; 403.9) coupe une ligne d'intersection d'un premier plan transversal et d'un second plan longitudinal;
- ledit premier plan transversal étant perpendiculaire à ladite direction longitudinale;
- ledit second plan longitudinal est perpendiculaire à ladite direction transversale et comprend un axe longitudinal (103.13; 203.13; 303.13; 403.13) dudit corps de wagon (103; 203; 303; 403);
- une projection perpendiculaire de ladite arête de séparation de flux (103.9; 203.9; 303.9; 403.9) sur ledit premier plan transversal ayant une largeur d'arête maximale $Ws_{max}$ dans ladite direction transversale, et ladite peau extérieure (103.4; 203.4; 303.4; 403.4) dans ledit premier plan transversal ayant une largeur maximale de corps de wagon $W_{max}$, ladite arête de séparation de flux (103.9; 203.9; 303.9; 403.9) étant agencé de sorte qu'une largeur d'arête maximale normalisée

$$ws_{max} = \frac{Ws_{max}}{W_{max}}$$

de ladite arête de séparation de flux (103,9; 203,9; 303,9; 403,9) est d'au moins 0,25, de préférence d'au moins 0,3, de manière davantage préférée de 0,3 à 1,0.

**10.** Véhicule selon l'une quelconque des revendications précédentes, dans lequel

- ladite arête de séparation de flux (103.9; 203.9; 303.9; 403.9) coupe une ligne d'intersection d'un premier plan transversal et d'un second plan longitudinal;
- ledit premier plan transversal étant perpendiculaire à ladite direction longitudinale;
- ledit second plan longitudinal est perpendiculaire à ladite direction transversale et comprend un axe longitudinal (103.13; 203.13; 303.13; 403.13) dudit corps de wagon (103; 203; 303; 403);
- ledit dispositif de séparation de flux (103.7; 203.7; 303.7; 403.7) comprenant une marche de séparation de flux (103.8; 203.8; 303.8; 403.8) avec un élément de paroi de marche (103.12; 203.12; 303.12; 403.12) descendant de ladite arête de séparation de flux (103.9; 203.9; 303.9; 403.9) et définissant, dans ledit second plan longitudinal, une extrémité inférieure (103.16) dudit dispositif de séparation de flux (103.7; 203.7; 303.7; 403.7), ladite marche de séparation de flux (103.8; 203.8; 303.8; 403.8), dans ledit sens de la hauteur, ayant une hauteur de marche $H_s$ entre ladite extrémité inférieure (103.16) et ladite arête de séparation de flux (103.9; 203.9; 303.9; 403.9), et ladite peau extérieure (103.4; 203.4; 303.4; 403.4), dans ledit second plan longitudinal, ayant une hauteur de corps de wagon H, ladite marche de séparation de flux (103.8; 203.8; 303,8; 403,8) étant agencée de sorte qu'une hauteur de marche normalisée

$$hs = \frac{Hs}{H}$$

de ladite marche de séparation de flux (103.8; 203.8; 303.8; 403.8) est d'au moins 0,005, de préférence d'au moins 0,01, de manière davantage préférée de 0,01 à 0,15.

**11.** Véhicule selon l'une quelconque des revendications précédentes, dans lequel

- ladite arête de séparation de flux (103.9; 203.9; 303.9; 403.9) coupe une ligne d'intersection d'un premier plan transversal et d'un second plan longitudinal;
- ledit premier plan transversal étant perpendiculaire à ladite direction longitudinale;
- ledit second plan longitudinal est perpendiculaire à ladite direction transversale et comprend un axe longitudinal (103.13; 203.13; 303.13; 403.13) dudit corps de wagon (103; 203; 303; 403);
- ledit dispositif de séparation de flux (103.7; 203.7; 303.7; 403.7) comprenant un marche de séparation de flux (103.8; 203.8; 303.8; 403.8) avec un élément de paroi de marche (103.12; 203.12; 303.12; 403.12) descendant de ladite arête de séparation de flux (103.9; 203.9; 303.9; 403.9) et définissant, dans ledit second plan longitudinal, une extrémité inférieure (103.16) dudit dispositif de séparation de flux (103.7; 203.7; 303.7; 403.7), une projection perpendiculaire de ladite marche de séparation de flux (103.8; 203.8; 303.8; 403.8) sur ledit premier plan transversal ayant une surface de marche As et un contour d'intersection de ladite peau extérieure (103.4; 203.4; 303.4; 403.4) et ledit premier plan transversal définissant une surface de contour d'intersection A, ladite marche de séparation du flux (103.8; 203.8; 303.8; 403.8) étant agencée de telle sorte qu'une surface de marche normalisée

$$as = \frac{As}{A}$$

de ladite marche de séparation de flux (103,8; 203,8; 303,8; 403,8) est d'au moins 0,003, de préférence d'au moins 0,005, plus préférablement, de 0,005 à 0.1

**12.** Véhicule selon l'une quelconque des revendications précédentes, dans lequel

- ledit dispositif de séparation de flux (103.7; 203.7; 303.7; 403.7) est agencé de telle sorte que ladite séparation persistante d'un premier flux d'air (106.1) de ladite peau extérieure (103.4; 203.4; 303.4 ; 403.4) dudit corps de wagon (103.8; 203.8; 303.8; 403.8) s'étend sur une zone de séparation de flux de ladite peau externe (103.4; 203.4; 303.4; 403.4);

- ladite zone de séparation de flux ayant une taille suffisante pour générer une première augmentation d'une distribution de pression statique à l'intérieur dudit premier flux d'air séparé (106.1) et pour au moins réduire, en particulier sensiblement éviter, la formation de deux vortex longitudinaux prononcés dans le sillage dudit corps de wagon (103; 203; 303; 403);

- ladite première augmentation de ladite distribution de pression statique dans ledit flux d'air séparé (106.1), en particulier, étant sélectionnée en fonction d'une distribution de pression statique dans un second flux d'air latéral adjacent (106.2) sur une partie latérale de ladite peau extérieure (103.4; 203.4; 303.4; 403.4) dudit corps de wagon (103; 203; 303; 403) situé au voisinage dudit dispositif de séparation de flux (103.7; 203.7; 303.7; 403.7);

**13.** Véhicule selon l'une quelconque des revendications précédentes, dans lequel

- ledit dispositif de séparation de flux (103.7; 203.7; 303.7; 403.7) est un premier dispositif de séparation de flux situé à une première extrémité dudit véhicule;
- un second dispositif de séparation de flux étant situé à une seconde extrémité opposée dudit véhicule;
- ledit second dispositif de séparation de flux, en particulier, étant sensiblement identique audit premier dispositif de séparation de flux (103.7; 203.7; 303.7; 403.7).

**14.** Véhicule selon l'une quelconque des revendications précédentes, dans lequel ledit corps de wagon (103; 203; 303; 403) est un corps de wagon à deux étages.

**15.** Procédé d'optimisation aérodynamique d'une section de tête de véhicule, en particulier de véhicule ferroviaire, pour un fonctionnement bidirectionnel à une vitesse de déplacement supérieure à 120 km/h, en particulier supérieure à 160 km/h, dans un sens de déplacement respectif, comprenant:

- dans une première étape, fournissant une section de tête initiale (107.1) montrant un motif de séparation de flux initial lorsque ledit véhicule roule à ladite vitesse de déplacement, ladite section de tête (107.1) formant une extrémité arrière dudit véhicule, ledit motif de séparation de flux initial comprenant une formation de deux vortex de sillage longitudinaux prononcés (108.1, 108.2) dans un sillage dudit véhicule; et,

- dans une étape suivante, modifier aérodynamiquement ladite section de tête initiale pour fournir une section de tête finale (103.2; 203.2; 303.2; 403.2) ayant des propriétés aérodynamiques améliorées;

- dans une deuxième étape, introduire un dispositif de séparation de flux (103.7; 203.7; 303.7; 403.7) dans une région supérieure de ladite section de tête pour former une véhicule selon l'une quelconque des revendications précédentes tout en fournissant ladite section de tête modifiée, ledit dispositif de séparation de flux (103.7; 203.7; 303.7; 403.7) générant un motif de séparation de flux modifié avec une séparation persistante d'un flux d'air (106.1) d'une peau extérieure (103.4; 203.4; 303.4; 403.4) dudit véhicule au niveau dudit dispositif de séparation de flux (103.7; 203.7; 303.7; 403.7) lorsque ledit véhicule circule à ladite vitesse de déplacement, ladite section de tête formant ladite extrémité arrière;

- dans une troisième étape, effectuer une analyse aérodynamique dudit motif de séparation de flux modifié au niveau de la formation desdits vortex de sillage longitudinaux prononcés dans ledit sillage dudit véhicule; et,

- dans une quatrième étape,

- si ladite analyse dans ladite troisième étape précédente révèle la formation desdits vortex de sillage longitudinaux prononcés, dans une première sous-étape, modifier au moins un paramètre structurel dudit dispositif de séparation de flux (103.7; 203.7; 303.7 ; 403.7) pour fournir une autre section de tête modifiée et répéter ladite troisième étape et ladite quatrième étape;

ou,

- si ladite analyse dans ladite troisième étape précédente ne révèle aucune formation desdits vortex de sillage longitudinaux prononcés, dans une deuxième sous-étape, en utilisant ladite section de tête modifiée analysée dans ladite troisième marche précédente en tant que ladite section de tête finale (103.2; 203.2; 303.2 ; 403,2);

- en particulier, au moins l'une de ladite première étape, ladite deuxième étape, ladite troisième étape et ladite quatrième étape est exécutée automatiquement en utilisant un modèle aérodynamique informatisé du véhicule précédemment établi.

Fig. 1

Fig. 2

Fig. 4

Fig. 3

Fig. 5

Fig. 6

Fig. 7

Fig. 8

PRIOR ART

Fig. 9

Fig. 10

Fig. 11

Fig. 12

Fig. 13

Fig. 14

Fig. 15

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 19912144 C1

- JP 01074160 A